# EUROPEAN PATENT APPLICATION

(11) **EP 4 262 143 A1**
(43) Date of publication of application: **18.10.2023**
(21) Application number: 21903390.9
(22) Date of filing: 07.12.2021
(51) Int. Cl.: H04L 9/32

(54) **CONTROL METHOD, DATA DISTRIBUTION SYSTEM, AND PROGRAM**

(30) Priority: 08.12.2020 US 202063122645 P
(71) Applicant: Panasonic Intellectual Property Corporation of America, Torrance, CA 90504 (US)
(72) Inventor: UNAGAMI, Yuji, Kadoma-shi, Osaka 571-0057 (JP); YAMAMOTO, Kakuya, Kadoma-shi, Osaka 571-0057 (JP); MITANI, Ayaka, Kadoma-shi, Osaka 571-0057 (JP); HAGA, Tomoyuki, Kadoma-shi, Osaka 571-0057 (JP)
(74) Representative: Novagraaf International SA
(86) International application number: PCT/JP2021/044850
(87) International publication number: WO 2022/124291

(57) **Abstract**

A service server generates a first smart contract programmed to be capable of executing provision of an incentive to a user when a goal indicated by generated challenge content generated is achieved (S12), generates first transaction data including the first smart contract, and transmits the data to a first authentication server. The first authentication server executes a consensus algorithm and records the first transaction data in a distributed ledger to run the first smart contract (S13). The first authentication server notifies a device used by the user of the challenge content (S14). The first authentication server obtains, from the device, second transaction data including first challenge content selected to be registered by the user (S15), and records the second transaction data in the distributed ledger by executing a consensus algorithm (S16).

## Description

### [Technical Field]

The present disclosure relates to a control method, a data distribution system, and a program.

### [Background Art]

Systems for collecting, analyzing, and distributing user data and device data are being examined in recent years. The increasing progress of the Internet of Things (IoT) and the spread of AI and the like will make it possible to collect even more data than before, leading to expectations for the collected data to be used in the future.

For example, NPL 1 discloses Society 5.0, which is a human-centered society which balances economic development with the resolution of social issues using a system that tightly integrates cyberspace (virtual spaces) with physical spaces (real spaces).

According to NPL 1, Society 5.0 will enable personal data to be collected and utilized for tourism or healthcare, for example.

### [Citation List]

### [Non Patent Literature]

[NPL 1] Strategy for Promoting Data Utilization to Realize Society 5.0. Retrieved December 5, 2020, from https://www.keidanren.or.jp/en/policy/2017/104.html?v=p

### [Summary of Invention]

### [Technical Problem]

However, if it is not known where and how data collected from users will be utilized, or in other words, if traceability of data collected from users cannot be ensured, it is conceivable that many users will worry about the risk of data leakage and avoid providing any data at all. Furthermore, users may refuse to continue providing data if there is no benefit for them to do so. Accordingly, it is necessary not only to ensure data traceability but also to present benefits to users in order to collect enough data to make that data usable.

Having been conceived of in light of the foregoing circumstances, an object of the present disclosure is to provide a control method and the like capable of presenting a benefit to a user while ensuring data traceability.

### [Solution to Problem]

To achieve the above-described object, a control method of the present disclosure is a control method for a data distribution system, the data distribution system including a plurality of authentication servers, each having a distributed ledger, and a service server. The control method includes: generating, by the service server, challenge content in which an incentive is provided to a user when the user achieves a goal which can be determined based on data of the user and which the user is challenging; generating, by the service server, a first smart contract programmed to be capable of executing provision of the incentive to the user when the goal indicated by the challenge content generated is achieved; generating first transaction data including the first smart contract and transmitting the first transaction data to a first authentication server among the plurality of authentication servers, by the service server; recording the first transaction data in the distributed ledger of the first authentication server and running the first smart contract by the first authentication server executing a consensus algorithm for agreeing on a validity of the first transaction data with a plurality of second authentication servers, among the plurality of authentication servers, that are different from the first authentication server; notifying a device used by the user of the challenge content, by the first authentication server; obtaining, from the device, second transaction data including first challenge content selected by the user to be registered from among the challenge content, by the first authentication server; and recording the second transaction data in the distributed ledger by the first authentication server executing a consensus algorithm for agreeing on a validity of the second transaction data with the plurality of second authentication servers.

Note that these comprehensive or specific aspects may be realized by a system, a method, an integrated circuit, a computer program, or a computer-readable recording medium such as a CD-ROM, or may be implemented by any desired combination of systems, methods, integrated circuits, computer programs, and recording media.

### [Advantageous Effects of Invention]

According to the present disclosure, a control method and the like can be realized which present a benefit to a user while ensuring data traceability.

### [Brief Description of Drawings]

[FIG. 1]

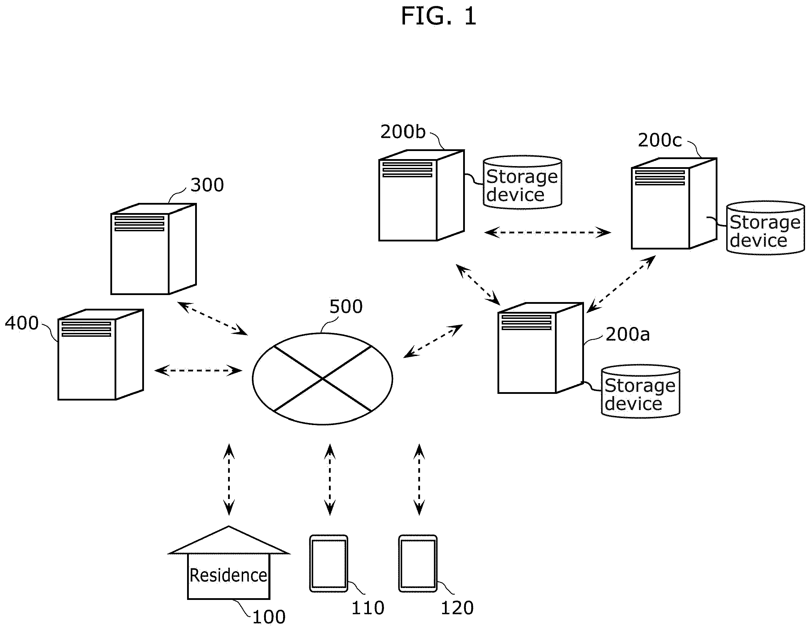

   FIG. 1 is a diagram illustrating an example of the overall configuration of a data distribution system according to an embodiment.
[FIG. 2]

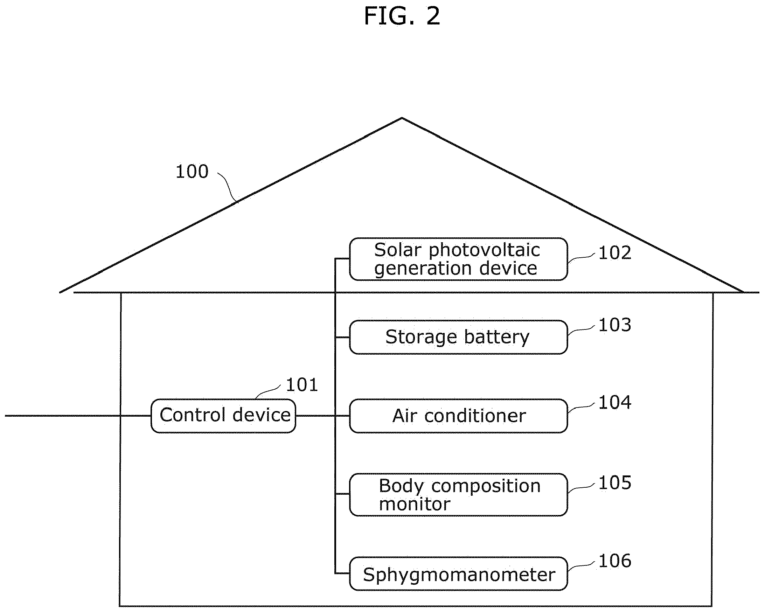

   FIG. 2 is a diagram illustrating an example of the overall configuration of a residence according to the embodiment.
[FIG. 3]

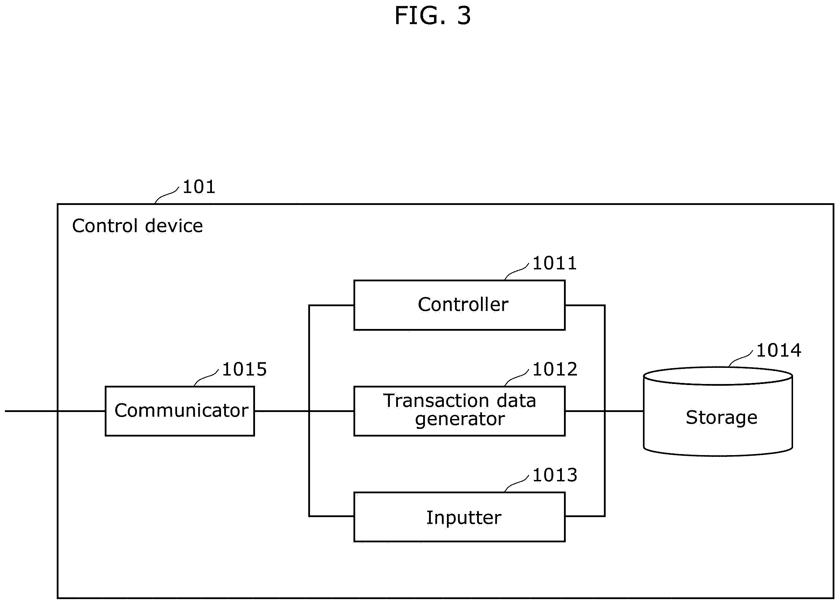

   FIG. 3 is a block diagram illustrating an example of the configuration of a control device illustrated in FIG. 2.
[FIG. 4]

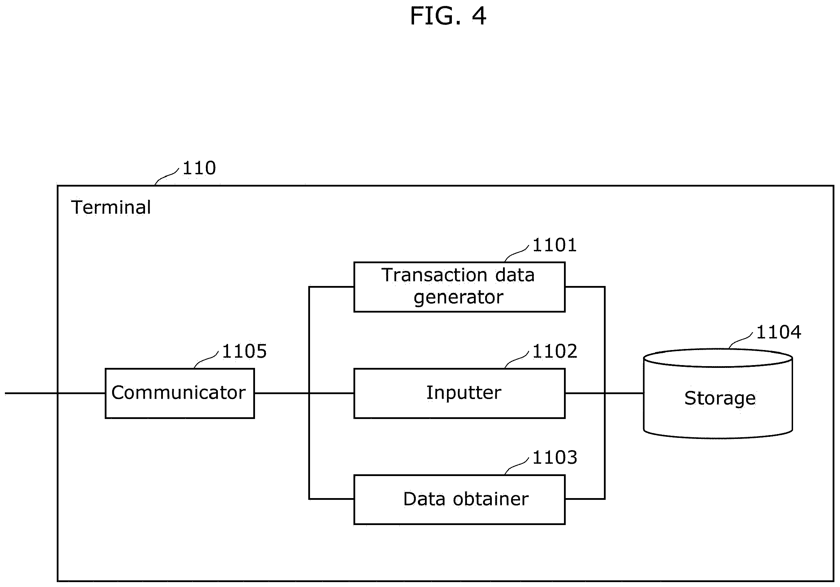

   FIG. 4 is a block diagram illustrating an example of the configuration of a terminal according to the embodiment.
[FIG. 5]

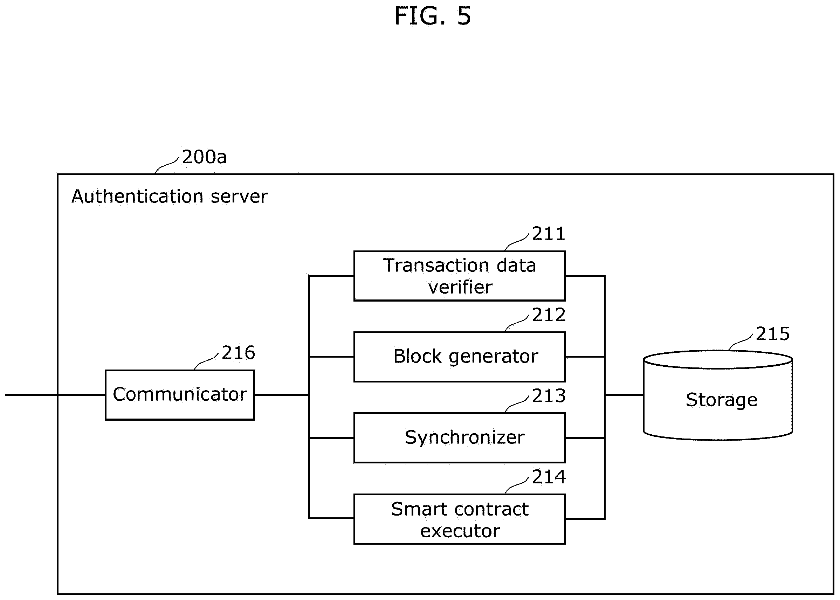

   FIG. 5 is a block diagram illustrating an example of the configuration of an authentication server according to the embodiment.
[FIG. 6]

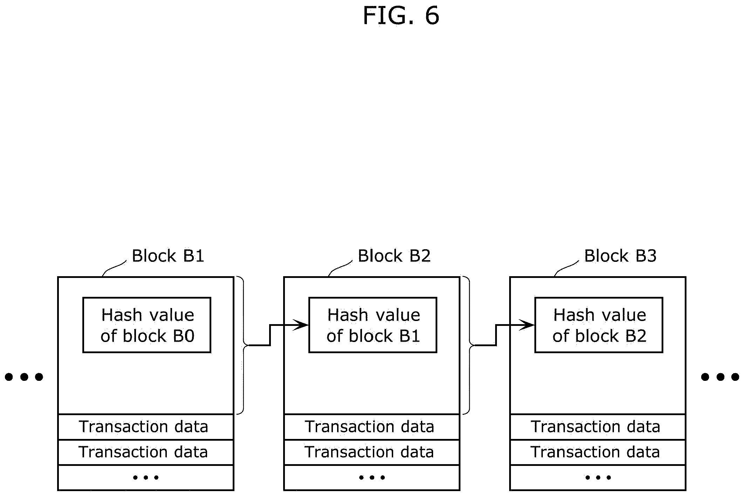

   FIG. 6 is a descriptive diagram illustrating the data structure of a blockchain.
[FIG. 7]

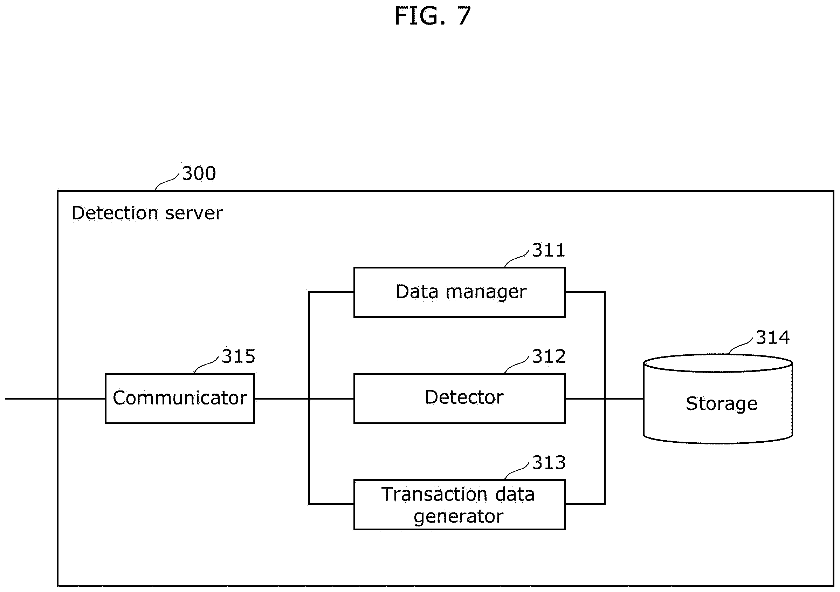

   FIG. 7 is a block diagram illustrating an example of the configuration of a detection server according to the embodiment.
[FIG. 8]

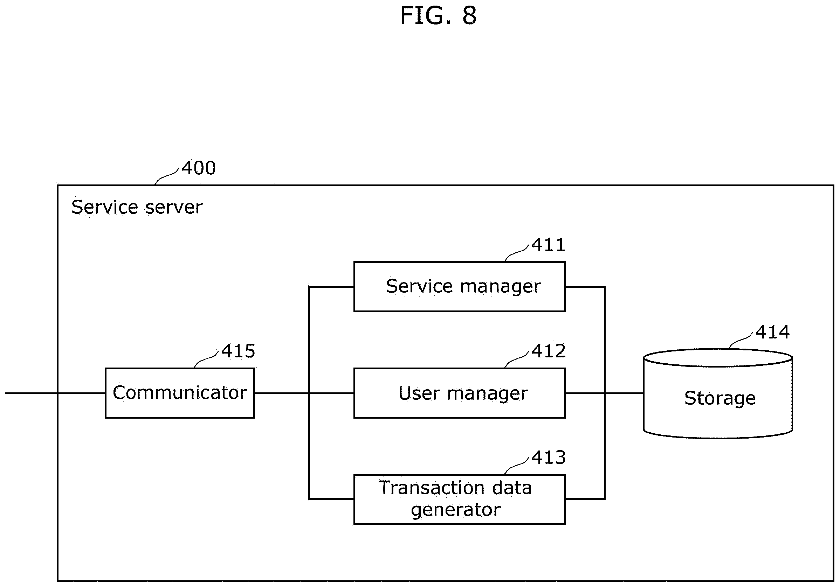

   FIG. 8 is a block diagram illustrating an example of the configuration of a service server according to the embodiment.
[FIG. 9]

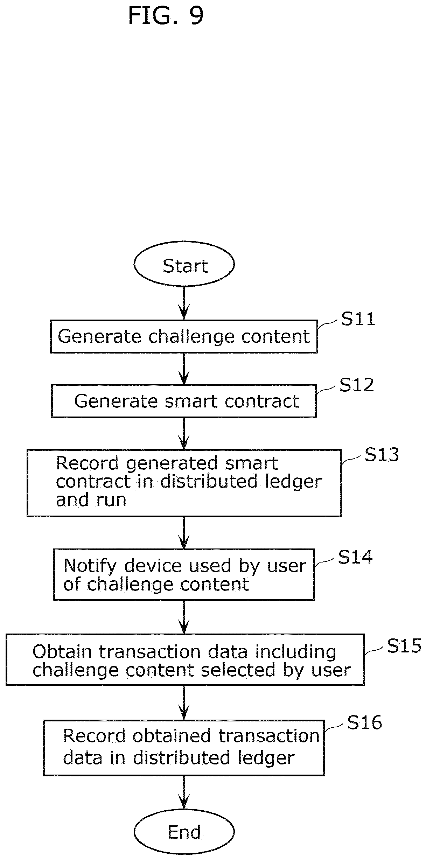

   FIG. 9 is a flowchart illustrating an example of operations of the data distribution system according to the embodiment.
[FIG. 10]

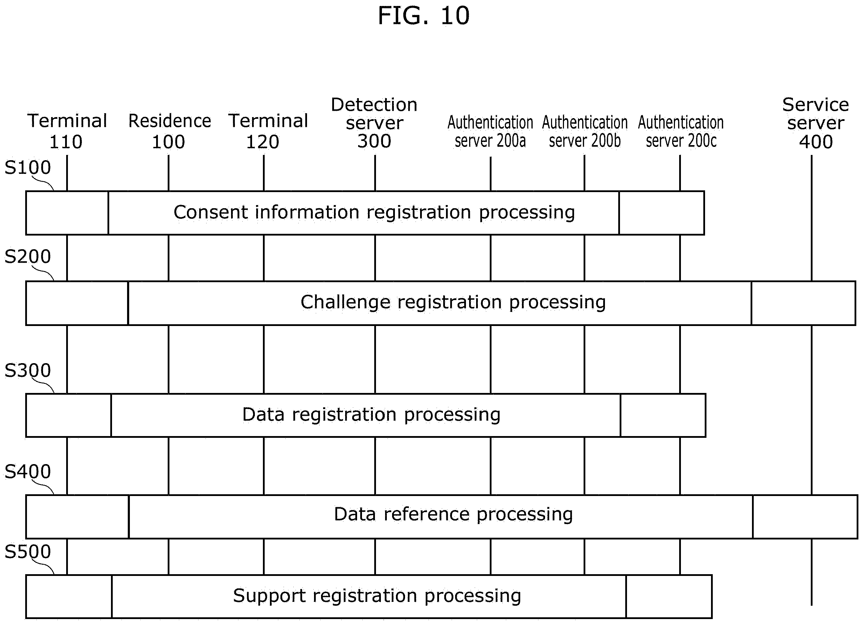

   FIG. 10 is an overall sequence chart of the data distribution system according to the embodiment.
[FIG. 11]

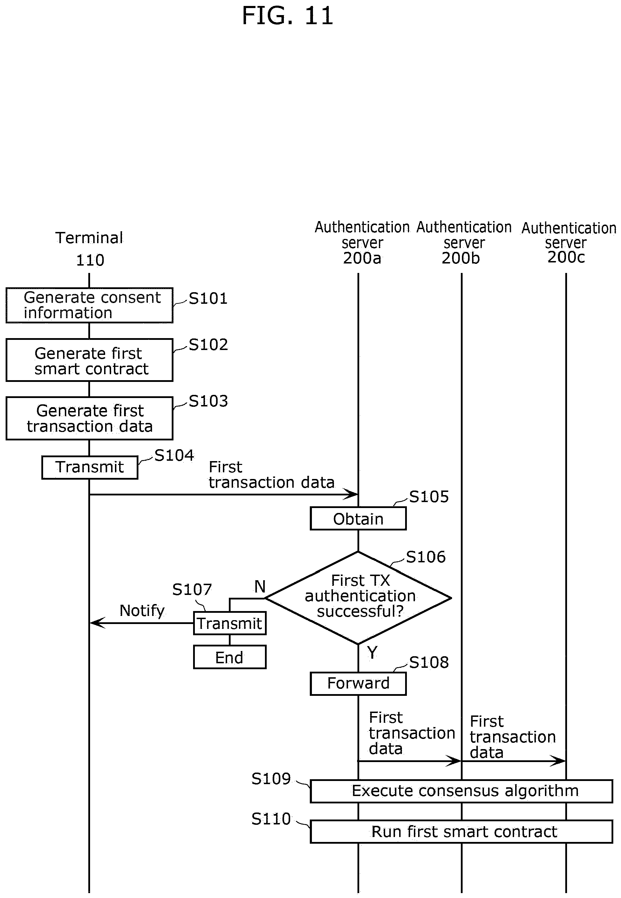

   FIG. 11 is a sequence chart illustrating consent information registration processing performed between the terminal and authentication servers according to the embodiment.
[FIG. 12A]

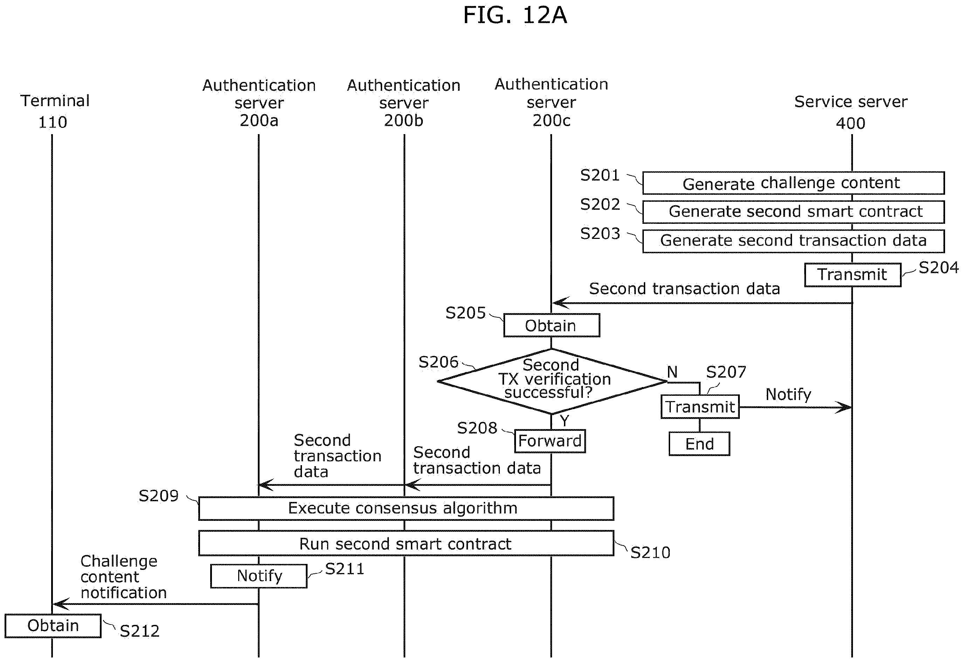

   FIG. 12A is a sequence chart illustrating challenge registration processing performed among the terminal, the authentication servers, and the service server according to the embodiment.
[FIG. 12B]

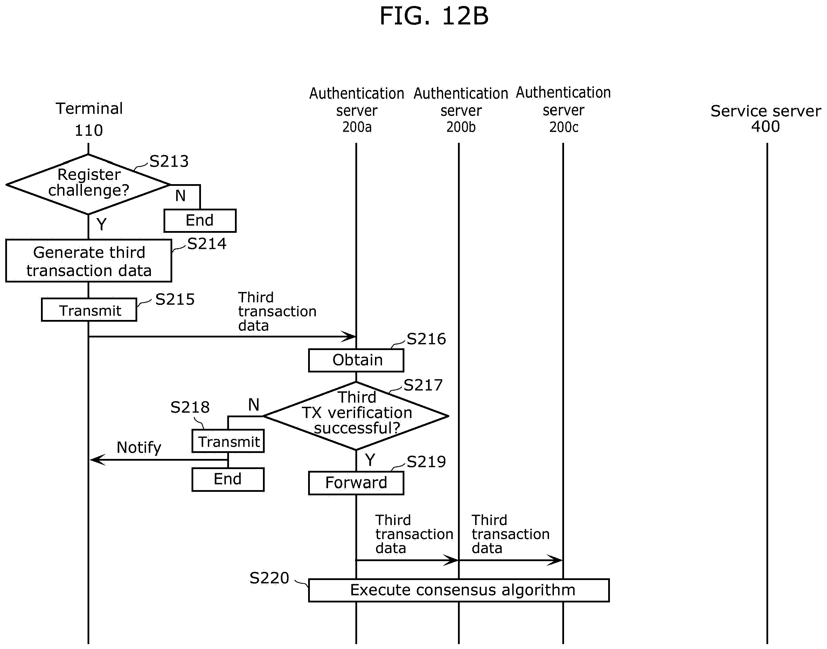

   FIG. 12B is a sequence chart illustrating challenge registration processing performed among the terminal, the authentication servers, and the service server according to the embodiment.
[FIG. 13A]

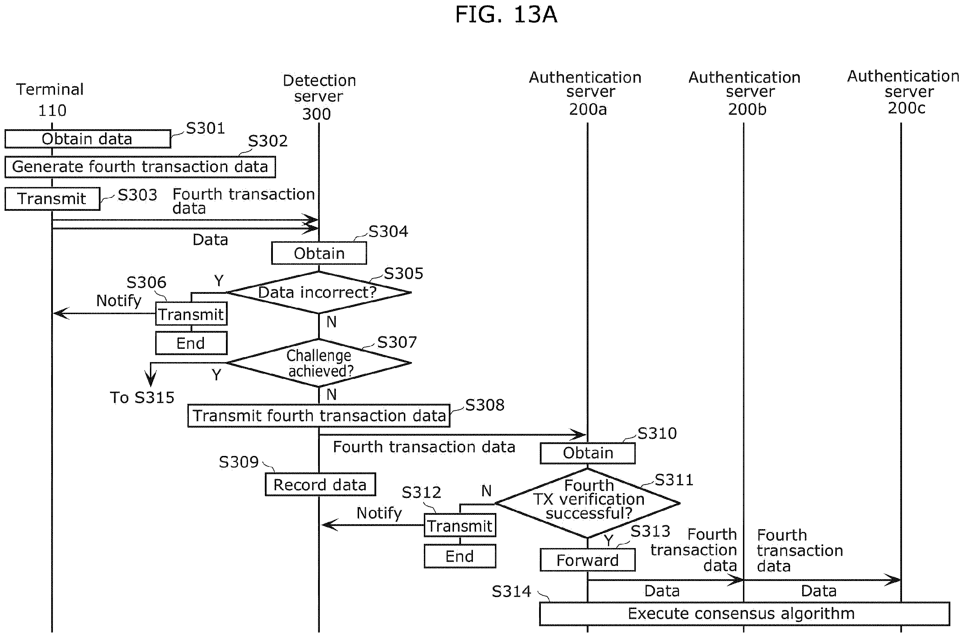

   FIG. 13A is a sequence chart illustrating data registration processing performed among the terminal, the authentication servers, and the detection server according to the embodiment.
[FIG. 13B]

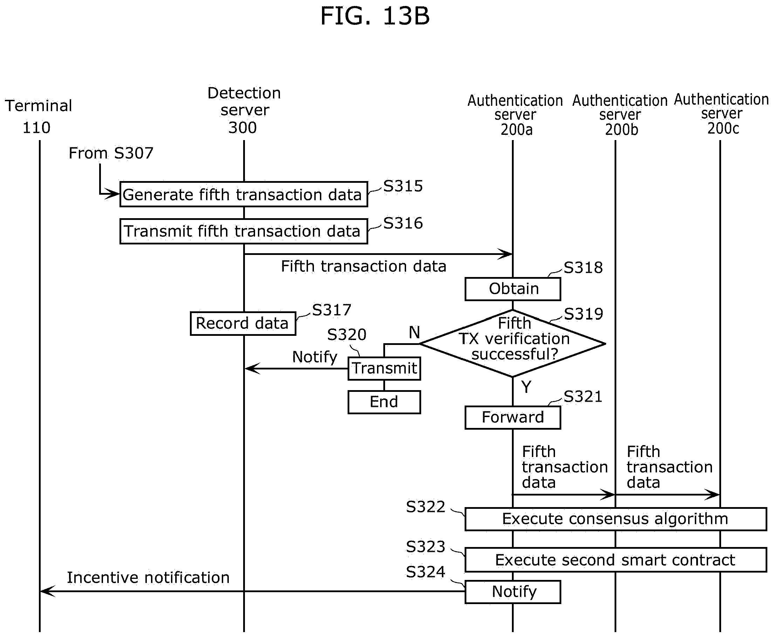

   FIG. 13B is a sequence chart illustrating data registration processing performed among the terminal, the authentication servers, and the detection server according to the embodiment.
[FIG. 14A]

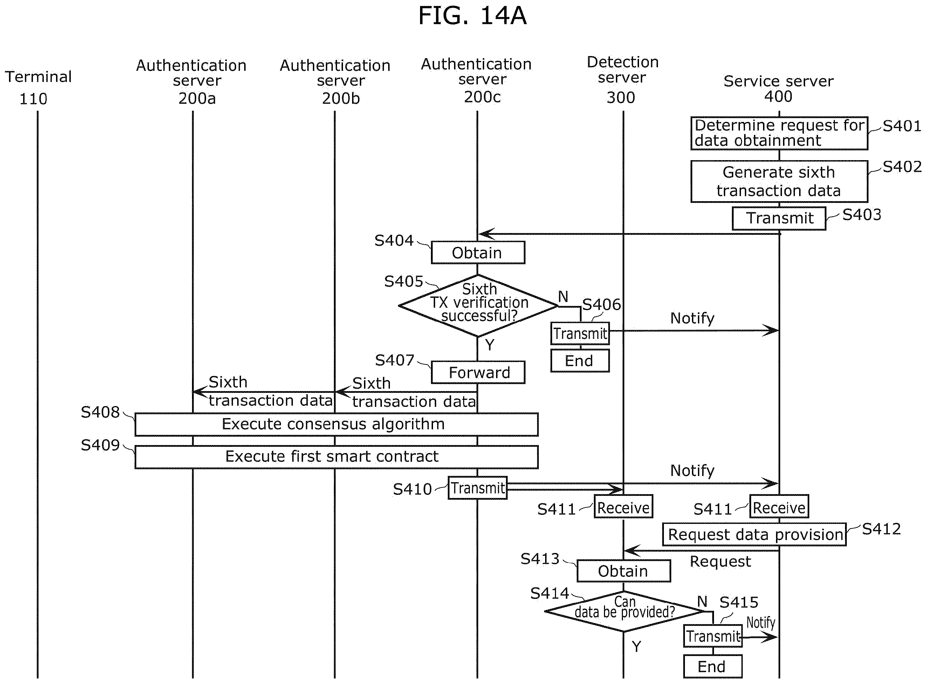

   FIG. 14A is a sequence chart illustrating data reference processing performed among the terminal, the authentication servers, the detection server, and the service server according to the embodiment.
[FIG. 14B]

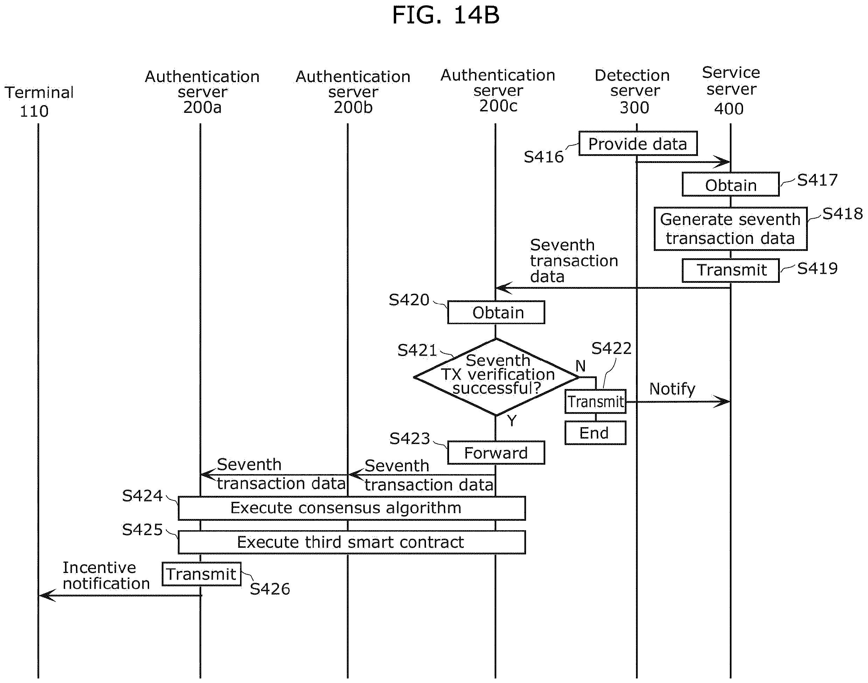

   FIG. 14B is a sequence chart illustrating data reference processing performed among the terminal, the authentication servers, the detection server, and the service server according to the embodiment.
[FIG. 15A]

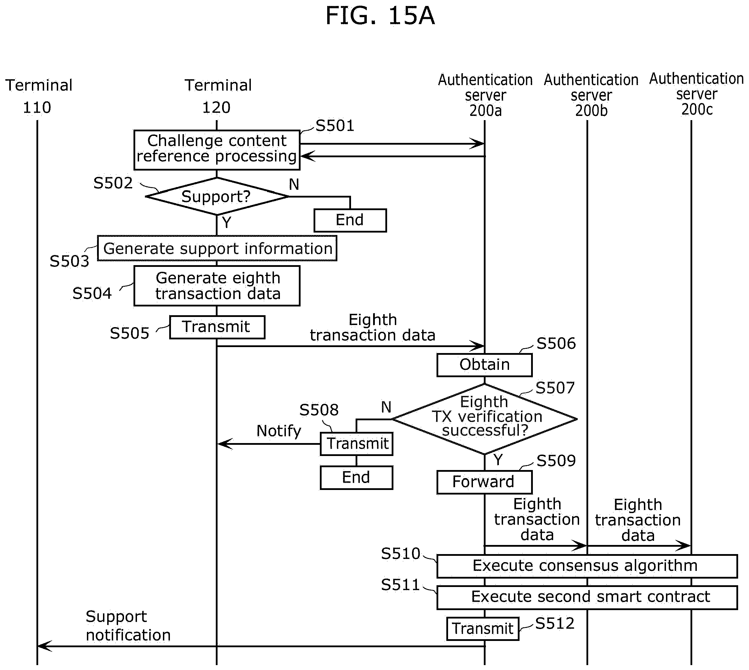

   FIG. 15A is a sequence chart illustrating challenge registration processing performed among the terminal and the authentication servers according to the embodiment.
[FIG. 15B]

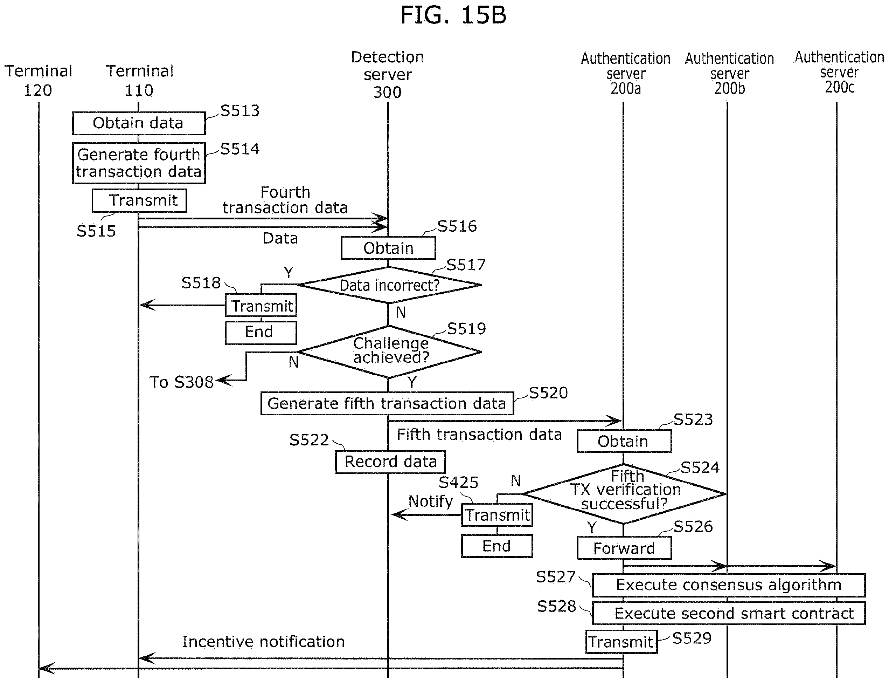

   FIG. 15B is a sequence chart illustrating challenge registration processing performed among the terminal, the authentication servers, and the detection server according to the embodiment.

### [Description of Embodiments]

A control method according to one aspect of the present disclosure is a control method for a data distribution system, the data distribution system including a plurality of authentication servers, each having a distributed ledger, and a service server. The control method includes: generating, by the service server, challenge content in which an incentive is provided to a user when the user achieves a goal which can be determined based on data of the user and which the user is challenging; generating, by the service server, a first smart contract programmed to be capable of executing provision of the incentive to the user when the goal indicated by the challenge content generated is achieved; generating first transaction data including the first smart contract and transmitting the first transaction data to a first authentication server among the plurality of authentication servers, by the service server; recording the first transaction data in the distributed ledger of the first authentication server and running the first smart contract by the first authentication server executing a consensus algorithm for agreeing on a validity of the first transaction data with a plurality of second authentication servers, among the plurality of authentication servers, that are different from the first authentication server; notifying a device used by the user of the challenge content, by the first authentication server; obtaining, from the device, second transaction data including first challenge content selected by the user to be registered from among the challenge content, by the first authentication server; and recording the second transaction data in the distributed ledger by the first authentication server executing a consensus algorithm for agreeing on a validity of the second transaction data with the plurality of second authentication servers.

Through this, a user can be notified of the content of a challenge for which the user will be provided an incentive upon achievement of the goal with which the user is challenging themselves, and the user can automatically be provided an incentive when the challenge is determined to have been achieved based on data obtained from the user. In this manner, by presenting a benefit to the user, the data can continue to be obtained from the user.

Furthermore, because distributed ledgers, which are blockchain technology, are used, information about the data obtained from the user can be recorded. In other words, data traceability can be ensured.

Accordingly, a benefit can be presented to a user while ensuring data traceability.

In addition, the control method may further include: obtaining, by the first authentication server, third transaction data generated when the goal indicated by the first challenge content is determined to have been achieved based on data of the user obtained by the device, the third transaction data including information on the data; and recording the third transaction data in the distributed ledger by the first authentication server executing a consensus algorithm for agreeing on a validity of the third transaction data with the plurality of second authentication servers, and when the third transaction data is recorded in the distributed ledger, the first smart contract may provide an incentive to the device used by the user when the goal indicated by the first challenge content is achieved.

Through this, the transaction data generated when the challenge is actually achieved based on data obtained from the user is recorded in the distributed ledger, which enables the smart contract to automatically provide an incentive to the device used by the user.

In addition, the first smart contract may be further programmed to be capable of executing registration of support information for the challenge content; the first authentication server may obtain fourth transaction data generated by a different device from the device, the fourth transaction data including support information for the first challenge content; the first authentication server may record the fourth transaction data in the distributed ledger by executing a consensus algorithm for agreeing on a validity of the fourth transaction data with the plurality of second authentication servers; and when the fourth transaction data is recorded in the distributed ledger, the first smart contract may register the support information for the first challenge content.

Through this, by recording transaction data including support information for the challenge content with which the user is challenging themselves in a distributed ledger, the smart contract can be caused to automatically register the support information for the challenge content.

Additionally, the first smart contract may be further programmed to be capable of executing provision of an incentive to a supporter who has registered the support information for the first challenge content when the goal indicated by the first challenge content is achieved; and when the third transaction data is recorded in the distributed ledger, the first smart contract may provide, to the device used by the user and the different device used by the supporter, the incentive provided when the goal indicated by the first challenge content is achieved.

In addition, by recording transaction data including support information in the distributed ledger, the smart contract can be caused to automatically provide an incentive to the device, used by the supporter, that generated the transaction data.

In addition, the first smart contract may be further programmed to be capable of executing provision of more incentives as a number of supporters who have registered support information for the first challenge content increases.

Through this, the more supporters who register support information for the challenge content with which the user is challenging themselves, the more incentives are provided to the user, and thus the user can work on the challenge content even more consistently. In other words, a greater benefit to the user can be presented.

In addition, the control method may further include: obtaining fifth transaction data including a second smart contract programmed to be capable of executing a determination as to whether the data from the device can be provided based on consent information pertaining to utilization of the data, and running the second smart contract by recording the fifth transaction data in the distributed ledger, by the first authentication server; generating sixth transaction data including a data obtainment request indicating a request to obtain the data, and transmitting the sixth transaction data to the first authentication server, by the service server; and obtaining the sixth transaction data and recording the sixth transaction data in the distributed ledger, by the first authentication server. When the sixth transaction data is recorded in the distributed ledger, the second smart contract may determine whether the data can be provided to the service server, and when the second smart contract determines that the data can be provided to the service server, the data may be provided to the service server.

In this manner, the distributed ledger records an indication that data has been forwarded or made available for reference, and thus the data can be utilized while ensuring data traceability. The user can therefore provide their data with peace of mind.

In addition, the challenge content may include a goal for improving or maintaining health of the user, the goal being determined based on vital data of the user.

Through this, challenge content that includes goals for the user to improve or maintain their health can be presented as the benefit to the user.

In addition, the challenge content may include a goal for the user to use a storage battery installed in a residence in which the user resides in a manner that suppresses degradation of the storage battery for a set period of time, the goal being determined based on data indicating power remaining in the storage battery.

Through this, challenge content that includes goals for an energy-efficient and ecological user lifestyle can be presented as the benefit to the user.

In addition, the challenge content may include a goal for the user to use only power generated by residential power generation equipment installed in a residence in which the user resides for a set period of time, the goal being determined based on data indicating an amount of power generated by the residential power generation equipment and an amount of power used by the residence.

Through this, challenge content that includes goals for an energy-efficient and ecological user lifestyle as the benefit to the user can be presented.

A data distribution system according to one aspect of the present disclosure is a data distribution system including a plurality of authentication servers, each having a distributed ledger, and a service server. The service server includes a CPU and a memory, and using the CPU and the memory, the service server: generates challenge content in which an incentive is provided to a user when the user achieves a goal which can be determined based on data of the user and which the user is challenging; generates a first smart contract programmed to be capable of executing provision of the incentive to the user when the goal indicated by the challenge content generated is achieved; and generates first transaction data including the first smart contract and transmits the first transaction data to a first authentication server among the plurality of authentication servers. The first authentication server records the first transaction data in the distributed ledger and runs the first smart contract by executing a consensus algorithm for agreeing on a validity of the first transaction data with a plurality of second authentication servers, among the plurality of authentication servers, that are different from the first authentication server. The first authentication server causes the first smart contract to notify a device used by the user of the challenge content. The first authentication server: obtains, from the device, second transaction data including first challenge content selected by the user to be registered from among the challenge content; and records the second transaction data in the distributed ledger by executing a consensus algorithm for agreeing on a validity of the second transaction data with the plurality of second authentication servers.

Embodiments will be described hereinafter with reference to the drawings. Note that the following embodiments describe specific examples of the present disclosure. Accordingly, the numerical values, shapes, materials, constituent elements, arrangements and connection states of constituent elements, steps, orders of steps, and the like in the following embodiments are merely examples of the present disclosure, and are not intended to limit the present disclosure. Additionally, of the constituent elements in the following embodiments, constituent elements not denoted in the independent claims, which express an embodiment of one aspect of the present disclosure, will be described as optional constituent elements. The present disclosure is not limited to being realized through the current independent claims, and can also be realized by other independent claims.

### [Embodiment 1]

### [1 System Configuration]

A data distribution system of the present disclosure can present a benefit to a user while ensuring data traceability.

The data distribution system and the like according to the embodiment will be described hereinafter with reference to the drawings.

### [1.1 Overall Configuration of Data Distribution System 10]

FIG. 1 is a diagram illustrating an example of the overall configuration of data distribution system 10 according to the present embodiment. As illustrated in FIG. 1, data distribution system 10 includes residence 100, terminals 110 and 120, authentication servers 200a, 200b, and 200c, detection server 300, and service server 400. These are connected over communication network 500.

Authentication servers 200a, 200b, and 200c (also referred to as "authentication servers 200" hereinafter) connect to a storage device having a distributed ledger in which blockchain transaction data and blocks are electronically recorded. Note that authentication servers 200 may be connected to the storage device over communication network 500, or may include internal storage devices.

Although FIG. 1 illustrates an example in which data distribution system 10 includes three authentication servers 200, the configuration is not limited thereto. In other words, data distribution system 10 may include at least four authentication servers 200.

### [1.2 Configuration of Residence 100]

FIG. 2 is a diagram illustrating an example of the overall configuration of residence 100 according to the present embodiment.

Residence 100 is an example of a device according to the present disclosure that obtains or collects user data. The obtained or collected data may be, for example, healthcare data such as a user's medical examination data, sleep data, blood pressure data, weight data, exercise data, or the like, but is not limited thereto. The obtained or collected data is not limited to healthcare data, and may be, for example, any user data that can be utilized by a service provider, i.e., the user's personal data. The obtained or collected data may be, for example, vital data such as a heartbeat, measurement data such as vital data measured by a device, the status of the device, or the like, or may be history information of the device such as an operation history of the device, a usage history of the device, or the like.

As illustrated in FIG. 2, in the present embodiment, residence 100 includes control device 101, solar photovoltaic generation device 102, storage battery 103, air conditioner 104, body composition monitor 105, and sphygmomanometer 106. These are connected over a communication network.

### [1.2.1 Control Device 101]

Control device 101 controls residential devices such as air conditioner 104, body composition monitor 105, sphygmomanometer 106, and the like. Controller 1011 may also display operation statuses of solar photovoltaic generation device 102 and storage battery 103, such as a power generation status of solar photovoltaic generation device 102, a power storage status of storage battery 103, and the like.

Control device 101 may also collect the history information, such as the operation history or the usage history of the residential devices, and may collect history information on the operation statuses of solar photovoltaic generation device 102 and storage battery 103. Control device 101 may also collect measurement data measured by the residential devices, and may display the collected measurement data.

Additionally, control device 101 may transmit data such as the collected history information and measurement data to detection server 300, and may transmit generated transaction data to authentication servers 200.

The specific configuration of control device 101 will be described later.

### [1.2.2 Solar Photovoltaic Generation Device]

Solar photovoltaic generation device 102 is a device provided with a power generation system that converts sunlight directly into electricity using solar cells. The power generated by solar photovoltaic generation device 102 is used in residence 100, stored in storage battery 103, and the like. The power generation status of solar photovoltaic generation device 102 may be obtained as data of a user residing in residence 100, i.e., as measurement data. Note that solar photovoltaic generation device 102 is not a required configuration and need not be provided in residence 100.

### [1.2.3 Storage Battery 103]

Storage battery 103 stores power generated by solar photovoltaic generation device 102. Storage battery 103 may be used within residence 100, such as to supply stored power to air conditioner 104, body composition monitor 105, and sphygmomanometer 106. In this case, the power storage status of storage battery 103 is obtained as data of the user residing in residence 100, i.e., as measurement data. Note that storage battery 103 is not a required configuration and need not be provided in residence 100.

### [1.2.4 Air Conditioner 104, Body Composition Monitor 105, and Sphygmomanometer 106]

Air conditioner 104, body composition monitor 105, and sphygmomanometer 106 are residential devices used by a user, and may be examples of devices used by a user according to the present disclosure. For example, the history information, such as the operation history or usage history, of air conditioner 104 is transmitted to detection server 300. Additionally, history information such as the operation history or usage history of body composition monitor 105 and sphygmomanometer 106, measurement data such as the user's weight data measured by body composition monitor 105 and/or the user's blood pressure data measured by sphygmomanometer 106, and the like are transmitted to detection server 300. Although the user's weight data and blood pressure data are examples of the measurement data of the present disclosure, these are also referred to as the user's "vital data". Note that this data may be transmitted to detection server 300 via control device 101, or may be transmitted directly to detection server 300.

An example of the configuration of control device 101 will be described hereinafter.

### [1.3 Configuration of Control Device 101]

FIG. 3 is a block diagram illustrating an example of the configuration of control device 101 illustrated in FIG. 2.

Control device 101 includes a processor (not shown) and a memory (not shown) in which is stored a program that causes the processor to execute predetermined processing. In other words, control device 101 can be implemented by the processor executing a predetermined program using the memory. As illustrated in FIG. 3, in the present embodiment, control device 101 includes controller 1011, transaction data generator 1012, inputter 1013, storage 1014, and communicator 1015.

### [1.3.1 Controller 1011]

Controller 1011 may control the residential devices. In the example illustrated in FIG. 2, controller 1011 operates the residential devices such as air conditioner 104, body composition monitor 105, sphygmomanometer 106, and the like, manages the operation histories and states of the residential devices, and the like. Controller 1011 may also display the operation statuses of solar photovoltaic generation device 102 and storage battery 103. For example, controller 1011 may display the power generation status of solar photovoltaic generation device 102 or the power storage status of storage battery 103. Additionally, controller 1011 may display the states of the residential devices or the vital data measured by body composition monitor 105 or sphygmomanometer 106.

Additionally, controller 1011 may collect the history information such as the operation history or usage history of the residential devices, or may collect the history information on the operation statuses of solar photovoltaic generation device 102 and storage battery 103. Additionally, controller 1011 may collect the measurement data measured by the residential devices.

### [1.3.2 Inputter 1013]

Inputter 1013 generates consent information pertaining to the utilization of the obtained or collected data. Here, the consent information is information indicating the content of the user's consent regarding the utilization of the obtained or collected data, and is generated based on the user's operation. The consent information may be generated by, for example, selecting or deselecting items in a list of service providers to be data recipients, or in a list of data, provided by inputter 1013. In this case, the consent information includes service providers to which the data can be provided due to the user having consented thereto, or data or types of data which can be provided due to the user having consented thereto. In other words, the consent information includes the service providers, or the data or data types, for which the user has consented to the data provision. The consent information may further include information which the user consents to provide when at least a certain level of feedback is obtained.

In this case, inputter 1013 may generate a smart contract based on the generated consent information (called a "first smart contract" hereinafter). Here, the first smart contract is programmed to be capable of executing a determination as to whether the data can be provided. The first smart contract may include the consent information generated by inputter 1013.

Additionally, in response to a user operation, inputter 1013 selects first challenge content among challenge content provided by service providers. Here, the challenge content includes at least one goal that can be determined based on a user's data, and for which an incentive is provided to the user when the user achieves the goal with which they are challenging themselves. The challenge content includes a goal which the user challenges themselves with to improve or maintain their health, and which is determined based on the user's vital data, such as, for example, walking 10,000 or more steps a day, losing 1 kilogram of weight in a month, improving blood pressure by 3% in a year, or the like. The goal with which the user challenges themselves may be called a "challenge item". The challenge content is not limited to a goal related to the user's health. The challenge content may include goals related to healthcare, such as goals that users challenge themselves with to improve the values of step number data, blood pressure data, and the like. For example, a goal in which the data from a previous health checkup is registered and the challenge is considered to be achieved when there is an improvement in the data in the next health checkup may be the goal related to healthcare. Additionally, weekly or daily hours of exercise or hours of sleep over a set period of time may be the goal related to healthcare. The challenge content may also include goals related to learning, such as study time goals for the user to obtain certifications or language skills, or may include lifestyle improvement goals. Additionally, the challenge content may include goals related to the user living an energy-saving and ecological life. For example, the challenge content may include a goal for the user to use storage battery 103 installed in residence 100 in which the user lives in a manner that suppresses degradation of storage battery 103 for a set period of time, the goal being determined based on data indicating the remaining power in storage battery 103. Additionally, the challenge content may include a goal for the user to supply power used by the residence only with the residential power generation equipment installed in residence 100 in which the user resides for a set period of time, the goal being determined based on data indicating a power generation amount of the residential power generation equipment and a power usage amount in residence 100. In the present embodiment, the residential power generation equipment is solar photovoltaic generation device 102, but may be residential power generation equipment using wind power, geothermal heat, or gas.

Inputter 1013 may select the first challenge content by selecting or deselecting items in a list of goals included in the challenge content provided by the service provider.

Note that inputter 1013 may be an application installed in control device 101, and in such a case, the installed application realizes the above-described functions of inputter 1013.

### [1.3.3 Transaction Data Generator 1012]

Transaction data generator 1012 generates blockchain transaction data. In the present embodiment, transaction data generator 1012 generates transaction data including the consent information generated by inputter 1013. More specifically, transaction data generator 1012 generates transaction data including a blockchain address held by the user, the consent information including the service provider, data, or data type for which the user has consented to data provision, and a signature, for example. Transaction data generator 1012 may further generate the transaction data by providing an identifier. Transaction data generator 1012 generates the signature using a user-specific signature generation key.

Additionally, transaction data generator 1012 may generate transaction data including the first smart contract generated by inputter 1013 (also called "first transaction data" hereinafter). Additionally, transaction data generator 1012 may generate the first transaction data including the consent information and the first smart contract generated by inputter 1013. Note that the first transaction data is an example of fifth transaction data according to the present disclosure.

Additionally, transaction data generator 1012 generates transaction data including the first challenge content selected by inputter 1013 (also called "third transaction data" hereinafter). Note that the third transaction data is an example of second transaction data according to the present disclosure.

More specifically, transaction data generator 1012 generates the third transaction data including a blockchain address held by the user, first service content that has been selected, and a signature, for example. Transaction data generator 1012 may further generate the third transaction data by providing an identifier. Transaction data generator 1012 generates the signature using a user-specific signature generation key. Note that the selected first service content may include the service provider that provides the selected first service content and the type of data for determining the goal of the first service content.

Additionally, transaction data generator 1012 may generate transaction data including information that indicates the user's data, such as the history information or measurement data collected by controller 1011 (also called "fourth transaction data" hereinafter). In this case, transaction data generator 1012 generates the fourth transaction data including a blockchain address held by the user, information indicating the data collected by controller 1011, and a signature, for example. Here, the information indicating the data may be, for example, the user's data itself collected by controller 1011, a hash value of the data, a hash value of the data and attribute information on the data, or the like.

The data attribute information may include, for example, the type of sensor or device that collected the data. When the data is step number data, weight data, body fat percentage data, or blood pressure data, the attribute information of the data may include data items indicating when, how, and for which item the data was measured or collected. Even when the data is from residential devices such as home appliances, data items indicating the operation history, operation date/time, and so on thereof may be included.

Transaction data generator 1012 records the generated transaction data in storage 1014. Transaction data generator 1012 transmits the data to authentication servers 200 or detection server 300 through communicator 1015.

### [1.3.4 Storage 1014]

Storage 1014 records data such as the history information, measurement data, and the like collected by controller 1011. Storage 1014 also records the transaction data generated by transaction data generator 1012. Additionally, storage 1014 may record the consent information and the smart contract generated by inputter 1013.

### [1.3.5 Communicator 1015]

Communicator 1015 communicates with authentication servers 200, detection server 300, and service server 400 over communication network 500. This communication may be performed using Transport Layer Security (TLS). In this case, an encryption key for TLS communication may be held by communicator 1015.

In the present embodiment, upon receiving a notification of challenge content from, for example, authentication server 200a, communicator 1015 records the notification in storage 1014 and notifies inputter 1013 thereof.

An example of the configuration of terminal 110 will be described next.

### [1.4 Configuration of Terminal 110]

Terminal 110 or terminal 120 is an example of a device used by a user according to the present disclosure. In this case, terminal 110 or terminal 120 is, for example, a device having a display and an input acceptor, such as a smartphone, a device that collects the user's measurement data, such as a wearable device, or the like. Additionally, terminal 110 or terminal 120 may be an example of a device used by a supporter according to the present disclosure, and in this case, terminal 110 or terminal 120 may be a device having a display and an input acceptor, such as a smartphone, for example. Terminal 110 and terminal 120 can both be implemented by a processor executing a predetermined program using a memory. The supporter will be described later.

Note that terminal 110 and terminal 120 have the same configuration, and thus terminal 110 will be described as an example hereinafter.

FIG. 4 is a block diagram illustrating an example of the configuration of terminal 110 according to the present embodiment.

As illustrated in FIG. 4, in the present embodiment, terminal 110 includes transaction data generator 1101, inputter 1102, data obtainer 1103, storage 1104, and communicator 1105. Hereinafter, terminal 110 will be described as being used by the user, and terminal 120 as being used by a supporter.

### [1.4.1 Inputter 1102]

Inputter 1102 generates user consent information pertaining to the utilization of data. As described above, the consent information is information indicating the content of the user's consent regarding the utilization of the obtained or collected data, and is generated based on the user's operation.

The consent information may be generated by, for example, selecting or deselecting items in a list of service providers to be data recipients, or in a list of data, provided by inputter 1013. In this case, the user may select the service providers to be data recipients based on the purpose of the utilization of the data, a track record of the utilization of the data, or feedback or an incentive provided to the user in response to the data being utilized. As an example of the incentive or feedback, when the user provides data to a service provider, the service provider pays the user in virtual currency or displays information which the user can enjoy. As another example of the incentive or feedback, if the user provides measurement data such as a measurement history from a body composition monitor or a sphygmomanometer to a sports club, the user can enjoy a free trial or reduced membership fees from the sports club, or information that can be enjoyed is displayed.

In this case, inputter 1102 may generate a first smart contract programmed to be capable of executing a determination as to whether data can be provided based on the generated consent information. Note that the first smart contract is an example of a second smart contract according to the present disclosure.

Additionally, in response to a user operation, inputter 1102 may select first challenge content among challenge content provided by service providers.

Note that when terminal 120 or terminal 110 is used by a supporter, inputter 1102 generates support information to support the user's challenge based on the user's information, in response to an operation by the supporter.

Here, the support information is information for supporting the user who challenges themselves with the goal indicated by the first challenge content. The first challenge content is challenge content selected and registered by the user from among challenge content provided by a service provider. The support information may be generated by being selected from a list of support content provided by the service provider and the registered first challenge content. The supporter who generates and registers the support information is provided with an incentive when the goal indicated by the first challenge content being supported is achieved. Accordingly, the support information may be generated by being selected, according to the incentive provided when the challenge is achieved as a result of being supported, from the list of support content provided by the service provider and the registered first challenge content.

Additionally, the supporter may provide virtual currency or points to the user being supported. In this case, the support information may be generated including an indication thereof. Additionally, the support information may further include a message to the effect that the supporter is providing support.

Note that inputter 1102 may be an application installed in control device 101, and in such a case, the installed application realizes the above-described functions of inputter 1102.

### [1.4.2 Transaction Data Generator 1101]

Transaction data generator 1101 generates blockchain transaction data. In the present embodiment, transaction data generator 1101 generates blockchain transaction data including the consent information generated by inputter 1102. More specifically, transaction data generator 1101 generates transaction data including a blockchain address held by the user, the consent information including the service provider, data, or data type for which the user has consented to data provision, and a signature, for example.

Transaction data generator 1101 may further generate the transaction data by providing an identifier. Transaction data generator 1101 may generate the signature using a user-specific signature generation key.

Additionally, transaction data generator 1101 may generate the first transaction data including the first smart contract generated by inputter 1102. Additionally, transaction data generator 1101 may generate the first transaction data including the consent information and the first smart contract generated by inputter 1102.

Additionally, transaction data generator 1101 generates the third transaction data including the first challenge content selected by inputter 1102. More specifically, transaction data generator 1101 generates the third transaction data including a blockchain address held by the user, first service content that has been selected, and a signature, for example. Transaction data generator 1101 may further generate the third transaction data by providing an identifier. Transaction data generator 1101 generates the signature using a user-specific signature generation key. Note that the selected first service content may include the service provider that provides the selected first service content and the type of data for determining the goal of the first service content.

Additionally, transaction data generator 1101 may generate fourth transaction data including information that indicates the user's data, such as the measurement data obtained by data obtainer 1103. In this case, transaction data generator 1101 generates the fourth transaction data including a blockchain address held by the user, information indicating the data obtained by data obtainer 1103, and a signature, for example. The information indicating the user's data may be, for example, the user's data itself obtained by data obtainer 1103, a hash value of the data, a hash value of the data and attribute information on the data, or the like.

Note that when terminal 120 or terminal 110 is used by a supporter, transaction data generator 1101 generates transaction data including the support information corresponding to the first challenge content (also called "eighth transaction data" hereinafter). Note that the eighth transaction data is an example of fourth transaction data according to the present disclosure. In the present embodiment, when terminal 120 or terminal 110 is used by a supporter, transaction data generator 1101 generates the eighth transaction data including the support information generated by inputter 1102. More specifically, transaction data generator 1101 generates the eighth transaction data including a blockchain address held by the user, the generated support information, an address of the second smart contract, and a signature, for example. Transaction data generator 1101 may further generate the eighth transaction data by providing an identifier. Transaction data generator 1101 generates the signature using a user-specific signature generation key.

Transaction data generator 1101 records the generated transaction data in storage 1104. Transaction data generator 1101 transmits the generated transaction data to authentication servers 200 or detection server 300 through communicator 1105.

### [1.4.3 Data Obtainer 1103]

Data obtainer 1103 obtains data such as measurement data obtained from sensors included in terminal 110. For example, when terminal 110 includes an accelerometer and a GPS sensor, data obtainer 1103 obtains step number data including a step number obtained from the accelerometer and location information obtained from the GPS sensor as the measurement data. Additionally, as the measurement data, data obtainer 1103 may obtain blood pressure data, or may obtain heart rate data. In other words, data obtainer 1103 obtains data that can be utilized by the service provider.

Data obtainer 1103 records the obtained data in storage 1104. Data obtainer 1103 may transmit the data to detection server 300 through communicator 1105.

### [1.4.4 Storage 1104]

Storage 1104 records the transaction data generated by transaction data generator 1101. Additionally, storage 1104 records the data obtained by data obtainer 1103. Note that storage 1104 may record the consent information and the first smart contract generated by inputter 1102.

### [1.4.5 Communicator 1105]

Communicator 1105 communicates with authentication servers 200 and detection server 300 over communication network 500. This communication may be performed using TLS. In this case, an encryption key for TLS communication may be held by communicator 1105.

In the present embodiment, upon receiving a notification of challenge content from, for example, authentication server 200a, communicator 1105 records the notification in storage 1104 and notifies inputter 1102 thereof.

Note that when terminal 120 or terminal 110 is used by a supporter, communicator 1105 may obtain information on the user who has registered the challenge using, for example, authentication server 200a, and display the information on the user in inputter 1102. The "user who has registered the challenge" means the user recorded in the challenge content that includes the goal with which the user challenges themselves.

An example of the configuration of authentication servers 200 will be described next.

### [1.5 Configuration of Authentication Server 200a]

FIG. 5 is a block diagram illustrating an example of the configuration of authentication server 200a according to the present embodiment. Authentication servers 200b and 200c have the same configuration, and authentication server 200a will therefore be described as an example hereinafter.

As illustrated in FIG. 5, authentication server 200a includes transaction data verifier 211, block generator 212, synchronizer 213, smart contract executor 214, storage 215, and communicator 216. Authentication server 200a can be implemented by a processor executing a predetermined program using a memory. Each constituent element will be described hereinafter.

### [1.5.1 Transaction Data Verifier 211]

Transaction data verifier 211 verifies received transaction data. Specifically, upon receiving transaction data from residence 100, a device such as terminal 110 or terminal 120, detection server 300, or service server 400, transaction data verifier 211 verifies whether the format of the transaction data is correct and whether the signature is valid. For example, when verifying transaction data including consent information, transaction data verifier 211 verifies whether the address, consent information, and signature included in the transaction data are valid. Note that, for example, when verifying transaction data including information indicating data, transaction data verifier 211 may verify whether the address, information indicating the data, and signature included in the transaction data are valid.

In this manner, transaction data verifier 211 verifies received transaction data by confirming the validity of the transaction data.

When the validity of the transaction data is confirmed as a result of the verification, transaction data verifier 211 records that transaction data in storage 215. Here, if it is determined that the transaction data is valid, synchronizer 213 is notified.

### [1.5.2 Block Generator 212]

When the verification of the transaction data by transaction data verifier 211 is successful, block generator 212 executes a consensus algorithm for the transaction data among the plurality of authentication servers 200. Here, a consensus algorithm called Practical Byzantine Fault Tolerance (PBFT) may be used as the consensus algorithm, or another publicly-known consensus algorithm such as Proof of Work (PoW) may be used.

In the present embodiment, block generator 212 executes the consensus algorithm among authentication server 200a, authentication server 200b, and authentication server 200c. In other words, block generator 212 first generates a block in a blockchain containing at least one instance of transaction data. Next, block generator 212 executes the consensus algorithm. Then, when consensus has been formed by executing the consensus algorithm, block generator 212 records the generated block in storage 215. The block generated by block generator 212 is connected to the blockchain by storage 215 and recorded.

The data structure of the blockchain will be described here.

FIG. 6 is a descriptive diagram illustrating the data structure of a blockchain.

A "blockchain" is a connection of blocks, which serve as a unit of record, in the form of a chain. Each block includes a plurality of instances of transaction data and a hash value of the block immediately previous in the chain. Specifically, block B2 includes the hash value of block B1, which is immediately previous in the chain. A hash value computed from the plurality of instances of transaction data included in block B2 and the hash value of block B1 is then included in block B3 as the hash value of block B2. Connecting the blocks in a chain with each block including the details of the previous block as a hash value in this manner makes it possible to effectively prevent tampering with the connected transaction data.

If, for example, a past instance of transaction data has been changed, the hash value of the block will have a value different from the pre-change value. This means that to make a block which has been tampered with appear normal, it is necessary to rebuild all the blocks previous thereto, which is a task that is extremely difficult in practice.

### [1.5.3 Synchronizer 213]

Synchronizer 213 synchronizes the blocks in the blockchain or the transaction data among the plurality of authentication servers 200 (authentication servers 200a to 200c).

In synchronizer 213 of the plurality of authentication servers 200, the transaction data of the blockchain is synchronized peer to peer. Then, synchronizer 213 records the transaction data of the blockchain for which synchronization has been carried out in storage 215. For example, when the validity of the transaction data is verified by transaction data verifier 211, synchronizer 213 forwards the verified transaction data to authentication servers 200b and 200c, which are other authentication servers 200. Additionally, when verified transaction data is received from another authentication server 200, synchronizer 213 records the received verified transaction data in storage 215.

### [1.5.4 Smart Contract Executor 214]

Smart contract executor 214 stores the smart contract recorded in the distributed ledger in working memory. Smart contract executor 214 executes the smart contract stored in the working memory.

For example, smart contract executor 214 stores the smart contract in the working memory when the transaction data including the smart contract is recorded in the distributed ledger, or in other words, when a block containing the transaction data is generated and recorded in the distributed ledger. Here, it is assumed that the smart contract is the first smart contract generated based on the user's consent information. In this case, by executing the first smart contract stored in the working memory, smart contract executor 214 can cause the executed first smart contract to determine whether data can be provided. Furthermore, the executed first smart contract makes a notification of the result of determining whether data can be provided, provides access rights to the blockchain address included in the transaction data containing a data obtainment request, and the like. In this manner, by using access from service server 400 as a trigger and executing the smart contract, smart contract executor 214 can manage access by service server 400 to data held by detection server 300.

Additionally, it is assumed that the smart contract is the second smart contract generated based on the challenge content. In this case, by executing the second smart contract stored in the working memory, smart contract executor 214 can cause the executed second smart contract to provide an incentive when the challenge is achieved. Additionally, when the support information is recorded, smart contract executor 214 causes the support information for the challenge content to be registered in the second smart contract by executing the second smart contract. Note that the second smart contract is an example of a first smart contract according to the present disclosure. Registration of the support information for the challenge content also means that the support information for the challenge content being managed is recorded by writing the support information recorded in the distributed ledger into the second smart contract.

Additionally, for example, it is assumed that the smart contract is a third smart contract generated based on providing an incentive payment or feedback in response to the user's data being provided or the user's data being referenced. In this case, by executing the third smart contract stored in the working memory, smart contract executor 214 can cause the executed third smart contract to provide an incentive payment or feedback to the device of the user who provided the data. The provision of the incentive payment or feedback may be a notification that an incentive payment has been made or feedback has been provided, or may be providing an incentive payment or feedback may be provided to the device used by the user who provided the data.

### [1.5.5 Storage 215]

Storage 215 includes the transaction data in a block and records the block into the distributed ledger of authentication server 200a. Storage 215 also records a smart contract for recording and running in the distributed ledger. The distributed ledger may be configured within storage 215, or may be configured within a storage device external to authentication server 200a.

Storage 215 also records user information, such as the challenge content, the identification information of the user who has registered the challenge content, or the like.

Note that the transaction data includes transaction data received from residence 100, devices such as terminal 110 and terminal 120, detection server 300, or service server 400.

In the present embodiment, when the validity of the received transaction data is confirmed, storage 215 records the block including the transaction data in the distributed ledger of authentication server 200a. Blocks of the blockchain recorded in the distributed ledger may be published to service server 400, residence 100, terminal 110, terminal 120, service server 400, or the like.

### [1.5.6 Communicator 216]

Communicator 216 communicates with residence 100, terminal 110, terminal 120, authentication servers 200b and 200c, detection server 300, and service server 400. This communication may be performed using TLS. In this case, an encryption key for TLS communication may be held by communicator 216.

In the present embodiment, communicator 216 notifies terminal 110 of the challenge content when the second smart contract is run. In addition, when terminal 120 makes a request to refer to the challenge content, communicator 216 provides the challenge content recorded in storage 215 and the user information registered for the challenge content in a referrable manner. Note that the notification of the challenge content may be made by the second smart contract if the smart contract has become capable of implementing a notification function.

In this manner, authentication server 200a verifies the validity of data obtained from residence 100, devices such as terminal 110 and terminal 120, and the like, manages whether data can be provided, and performs processing for providing data to service server 400. Although the data obtained from residence 100, devices such as terminal 110 and terminal 120, and the like are described as being recorded by detection server 300 and not being recorded by authentication server 200a, the configuration is not limited thereto. The data may be recorded by authentication server 200a. In this case, the transaction data including that data may be recorded in the distributed ledger of authentication server 200a.

Detection server 300 will be described next.

### [1.6 Configuration of Detection Server 300]

FIG. 7 is a block diagram illustrating an example of the configuration of detection server 300 according to the present embodiment.

As illustrated in FIG. 7, detection server 300 includes data manager 311, detector 312, transaction data generator 313, storage 314, and communicator 315. Detection server 300 can be implemented by a processor executing a predetermined program using a memory. Each constituent element will be described hereinafter.

### [1.6.1 Data Manager 311]

Data manager 311 manages data obtained from residence 100, devices such as terminal 110 and terminal 120, and the like. Data manager 311 records data which has been detected by detector 312 as not being incorrect data in storage 314. Data manager 311 may transmit attribute information of the data obtained from residence 100, devices such as terminal 110 and terminal 120, and the like to transaction data generator 313. Note that the data attribute information may include the type of sensor or device that collected the data, or the data items, as described above. Additionally, data manager 311 may record, in storage 314, data detected by detector 312 as incorrect data, to which information indicating that the data is incorrect data is added.

When detector 312 detects that the data obtained from a device such as terminal 110 or the like is not incorrect data, data manager 311 transmits the fourth transaction data obtained from the device such as terminal 110 or the like to authentication server 200a or the like.

Furthermore, when detector 312 detects that the goal indicated by the first challenge content has been achieved using the data included in the fourth transaction data, data manager 311 causes transaction data generator 313 to generate the fifth transaction data. Then, data manager 311 transmits the generated fifth transaction data to authentication server 200a and the like. Note that the fifth transaction data is an example of third transaction data according to the present disclosure.

Data manager 311 also provides the user's data based on the consent information recorded in the distributed ledger of authentication server 200 when a request to provide data is received from service server 400. In the present embodiment, it is assumed that authentication server 200 executes the first smart contract generated based on the consent information, and that detection server 300 receives a notification from authentication server 200 indicating that the data can be provided. In this case, the user's data is provided when data manager 311 receives a request to provide data from service server 400. Note that data manager 311 may obtain, from service server 400, a blockchain address corresponding to the data to be provided along with the request to provide the data.

### [1.6.2 Detector 312]

Detector 312 detects whether the user of terminal 110 has achieved the goal with which they are challenging themselves, indicated in the first challenge content registered by the user, based on data obtained from a device, such as terminal 110.

Additionally, detector 312 detects whether data obtained from residence 100, devices such as terminal 110 and terminal 120, and the like is incorrect data.

For example, when the step number data indicates that at least 10,000 steps have been measured in ten minutes, detector 312 may detect that the step number data is incorrect data. This is because it is impossible for a person such as the user to walk 10,000 steps in ten minutes, and thus if at least 10,000 steps have been measured in ten minutes, the step number data is incorrect due to having been tampered with or the like, and the step number data can therefore be considered to be incorrect data.

In this manner, when the measured step number data is obtained from a device such as terminal 110, detector 312 may detect that the step number data is incorrect data when the step number data includes a step number for which the step number measured within a predetermined period is at least a threshold.

Detector 312 may also detect that the step number data is incorrect data when the step number data includes a step number that increases by a set percentage in a time that is at least a threshold. When the step number increases by a set percentage in a time that is at least the threshold, it is assumed that an improper action has been taken, such as using a pendulum or the like to operate terminal 110 or the like that includes a sensor, and thus the step number data can be considered to be incorrect data.

Additionally, for example, when step number data including a measured step number and location information at the time of measurement is obtained from a device such as terminal 110, detector 312 may detect the step number data as being incorrect data when the step number data includes a step number in a state where the location information does not change for at least a predetermined length of time. When the step number increases despite the location information not changing, it is assumed that an improper action has been taken, such as using a pendulum or the like to operate terminal 110 or the like that includes a sensor, and thus the step number data can be considered to be incorrect data.

Additionally, for example, when step number data including a measured step number and a heart rate at the time of measurement is obtained from a device such as terminal 110, detector 312 may detect the step number data as being incorrect data when the step number data includes a step number in a state where the heart rate does not change for at least a predetermined length of time.

Additionally, for example, when step number data being measured has been obtained from a device such as terminal 110, detector 312 may transmit a message to the device such as terminal 110 to have the user make some kind of input. Detector 312 may then determine that the obtained step number data is incorrect data when some kind of input result made in response to the message is not obtained from the device.

Additionally, when measurement data of a body composition monitor is obtained from a device such as terminal 110, detector 312 may detect the obtained measurement data as being incorrect data when the measurement data includes a body composition measurement value that has changed by a value of at least a threshold compared to the previous body composition measurement value.

Additionally, when measurement data of a body composition monitor is obtained from a device such as terminal 110, detector 312 may detect the obtained measurement data as being incorrect data when a change of at least a threshold has occurred within a given period from the previous body composition measurement value. Specifically, when a blood pressure value measured within one minute from the previous blood pressure value has changed by at least 30, detector 312 may detect the measurement data of the blood pressure value as being incorrect data. Additionally, when a measured body composition measurement value measured within one day from the previous body composition measurement value has changed by at least five kilograms, detector 312 may detect the measurement data of the body composition measurement value as being incorrect data.

Additionally, for example, when data is obtained from a device such as terminal 110 and information indicating an anomaly in the device is further obtained, detector 312 may detect the obtained data as being incorrect data.

Note that detector 312 may detect an anomaly in a device such as solar photovoltaic generation device 102 or storage battery 103 present in residence 100. For example, detector 312 may obtain weather information from an external server (not shown) and detect an anomaly or malfunction in solar photovoltaic generation device 102 when the power generation amount of solar photovoltaic generation device 102 is high despite the weather not being sunny. Additionally, for example, detector 312 may detect an anomaly or malfunction in storage battery 103 when the remaining power in storage battery 103 is not decreasing despite a device in residence 100, such as air conditioner 104, using power from storage battery 103.

Additionally, in addition to being capable of detecting that the obtained data is incorrect data, detector 312 may detect anomalous operation or non-operation due to a problem such as a malfunction in a device. Specifically, when data obtained periodically from a device in residence 100, such as solar photovoltaic generation device 102 or storage battery 103, cannot be received, or when the obtained data is anomalous data such as corrupt data, detector 312 may detect that the device has malfunctioned.

Additionally, detector 312 may use data from another terminal or another residence to detect an anomaly in a device such as solar photovoltaic generation device 102 or storage battery 103 present in residence 100. For example, detector 312 may verify the power generation amount of solar photovoltaic generation device 102 obtained from residence 100 using the power generation amount of a solar photovoltaic generation device in a residence adjacent to residence 100, and may detect an anomaly or malfunction in solar photovoltaic generation device 102 when the amounts differ by at least a threshold. Additionally, the data may be verified based on the data received in the past from the terminal, devices in the residence, or the like, the data of the user using the terminal, and the like.

When detector 312 detects that the data obtained from a device such as terminal 110 is not incorrect data, that data is transmitted to data manager 311 and recorded in storage 314.

On the other hand, when detector 312 detects that the data obtained from residence 100 or a device such as terminal 110 is incorrect data, the data may be discarded, or the data may be recorded in storage 314 with an attribute indicating that the data is incorrect data. Then, detector 312 may transmit attribute information provided with an indication that the data is incorrect data to transaction data generator 313.

Note that when detector 312 has detected that the data obtained from a device is incorrect data or that there is an anomaly in the device, a notification to that effect may be transmitted to terminal 110 or control device 101 of residence 100 to make an inquiry with the user.

### [1.6.3 Transaction Data Generator 313]

When it is determined that the goal indicated by the first challenge content has been achieved based on the user's data obtained from a device such as terminal 110, transaction data generator 313 generates fifth transaction data including information on that data.

In the present embodiment, transaction data generator 313 generates the fifth transaction data when detector 312 detects that the goal indicated by the first challenge content has been achieved based on the data obtained from a device such as terminal 110. Here, the fifth transaction data includes an indication that the first challenge content has been achieved, in addition to the information included in the fourth transaction data.

Transaction data generator 313 records the generated fifth transaction data in storage 314. Additionally, transaction data generator 313 transmits the generated fifth transaction data to authentication servers 200 through communicator 315.

### [1.6.4 Storage 314]

When data is obtained from a device such as terminal 110, storage 314 records the obtained data. Additionally, storage 314 records the detection result of detecting whether the data obtained by detection server 300 is incorrect data. Additionally, storage 314 records the first challenge content registered by the user of terminal 110 stored in the distributed ledger of authentication server 200a or the like. Additionally, when transaction data generator 313 has generated the fifth transaction data, storage 314 records that fifth transaction data.

### [1.6.5 Communicator 315]

Communicator 315 communicates with residence 100, terminal 110, terminal 120, authentication servers 200, and service server 400 over communication network 500. This communication may be performed using TLS. In this case, an encryption key for TLS communication may be held by communicator 315.

In this manner, detection server 300 detects whether the data obtained from a device such as terminal 110 indicates that the user of terminal 110 has achieved the goal indicated in the first challenge content registered by the user. Additionally, detection server 300 detects whether the data obtained from terminal 110 or the like is incorrect data, and records that data. For example, detection server 300 obtains step number data from terminal 110, and when the step number data is detected as not being incorrect data, records that data, and also records information pertaining to that data in authentication servers 200.

Although the present embodiment describes detection server 300 and authentication servers 200 as separate servers, the configuration is not limited thereto. The function of detection server 300 may be included and executed in authentication server 200.

An example of the configuration of service server 400 will be described next.

### [1.7 Configuration of Service Server 400]

FIG. 8 is a block diagram illustrating an example of the configuration of service server 400 according to the present embodiment.

Service server 400 is a server managed by a service provider to provide a service, e.g., a server of a sports club. As illustrated in FIG. 8, in the present embodiment, service server 400 includes service manager 411, user manager 412, transaction data generator 413, storage 414, and communicator 415. Service server 400 can be implemented by a processor such as a CPU executing a predetermined program using a memory. Each constituent element will be described hereinafter.

### [1.7.1 Service Manager 411]

Service manager 411 provides a service utilizing the information of a user managed by user manager 412. For example, service manager 411 obtains data including measurement data such as the user's body composition measurement value, blood pressure measurement value, or the like from detection server 300, provides a new healthcare service, demonstrates effects, and the like.

In the present embodiment, service manager 411 generates the challenge content provided by the service provider. Although described above, the challenge content includes at least one first challenge content including a goal that can be determined based on a user's data, and for which an incentive is provided to the user when the user achieves the goal with which they are challenging themselves. As described above, the challenge content includes a goal with which the user is challenging themselves, such as walking 10,000 or more steps per day, and which is determined based on the user's vital data. Other examples will not be described to avoid redundancy.

Additionally, in the present embodiment, service manager 411 manages incentives for a user who has challenged themselves with the goal indicated by the challenge content and achieved the goal. The incentive for the user to achieve the challenge may be the distribution of a predetermined amount of virtual currency, or may be the provision of a predetermined amount of points or a predetermined service.

Service manager 411 generates the second smart contract programmed to be capable of executing the provision of an incentive to the user when the goal indicated by the generated challenge content is achieved.

In the present embodiment, the challenge content is written into the second smart contract and managed. By referring to the challenge content managed in the second smart contract, authentication server 200a and the like can notify the user of the challenge content.

Note that the second smart contract may furthermore be programmed to be capable of executing the registration of the support information for the challenge content. In this case, the second smart contract is programmed to be capable of executing the provision of an incentive to the supporter who registered the support information for the challenge content when the goal indicated by the challenge content is achieved. Furthermore, the second smart contract may be programmed to be capable of executing the provision of more incentives as the number of supporters who registered the support information for the challenge content increases.

Additionally, service manager 411 manages a service for registering a user who is a supporter of the user who has registered the challenge content including the goal to be challenged, i.e., the user who has registered the challenge. Here, when a supporter is registered, service manager 411 manages not only the incentive provided to the user for achieving the challenge in the challenge content for which the support information has been recorded, but also the incentive provided to the supporter. Note that service manager 411 may manage support toward the achievement of the challenge, such as by sending, to the user who achieved the challenge, virtual currency or points prepared by the supporter or a message indicating that the supporter is providing support.

Additionally, service manager 411 generates a data obtainment request indicating a request to obtain data, using the information on the user managed by user manager 412, and transmits that request to transaction data generator 413. For example, service manager 411 determines what kind of data of the user is to be obtained and generates the data obtainment request based on the attribute information of the user for which the data is to be obtained, the type of data to be obtained, or the like. The data obtainment request may include, for example, a request specifying the user's identifier if the user's identifier is known in advance, a request specifying a blockchain address, or a request specifying an attribute. The attribute here may be residence 100 or the type of the device, such as terminal 110, the type of the data to be obtained from the device, or the user's attribute.

Additionally, when data is obtained, service manager 411 generates information pertaining to the provision of an incentive payment or feedback to the user of the obtained or referenced data as compensation for the obtained data, and transmits that information to transaction data generator 413. Here, the information pertaining to the provision of an incentive payment or feedback may include an indication that virtual currency has been paid to the user's blockchain address as compensation for the obtained data.

Note that in the present embodiment, service manager 411 generates the third smart contract based on the provision of the incentive payment or feedback in response to the user's data being provided or the user's data being referenced. The third smart contract may include a program for executing the payment of virtual currency to the user's blockchain address as compensation for the obtained data, for example.

### [1.7.2 User Manager 412]

User manager 412 manages information on the users to whom the service is provided.

User manager 412 obtains information on a user to whom the service is to be provided, and manages the obtained information on the user.

In the present embodiment, for example, user manager 412 obtains information on users who have registered a challenge, and manages the obtained information on the users. User manager 412 also manages information on a user who is a supporter supporting a user who has registered a challenge, for example.

### [1.7.3 Transaction Data Generator 413]

Transaction data generator 413 generates transaction data including service content generated by service manager 411.

In the present embodiment, transaction data generator 413 generates second transaction data including the second smart contract generated by service manager 411 based on the challenge content. Note that the second transaction data is an example of first transaction data according to the present disclosure.

Transaction data generator 413 also generates sixth transaction data including the data obtainment request generated by service manager 411. Note that the sixth transaction data is an example of sixth transaction data according to the present disclosure.

Transaction data generator 413 also generates seventh transaction data including the information, generated by service manager 411, pertaining to the provision of an incentive payment or feedback in response to the user's data being provided or the user's data being referenced.

Note that in the present embodiment, transaction data generator 413 generates transaction data including the third smart contract based on the provision of the incentive payment or feedback, generated by service manager 411.

### [1.7.4 Storage 414]

Storage 414 records user information or service information necessary for providing the service.

In the present embodiment, storage 414 records the challenge content provided by the service provider, generated by service manager 411. Storage 414 also records information on a user who has registered a challenge or is a supporter who supports a user who has registered a challenge. Additionally, storage 414 records incentives for a user who has challenged themselves with the goal indicated by the challenge content generated by service manager 411 and achieved the goal.

Storage 414 also records the content of the data obtainment request generated by service manager 411, information pertaining to the provision of an incentive payment or feedback to the user whose data has been obtained or referenced, and the like.

Storage 414 also records the smart contract generated by service manager 411.

Storage 414 also records the transaction data generated by transaction data generator 413.

### [1.7.5 Communicator 415]

Communicator 415 communicates with authentication servers 200 and detection server 300 over communication network 500. This communication may be performed using TLS. In this case, an encryption key for TLS communication may be held by communicator 415.

### [1.8 Operations of Data Distribution System 10]

### [1.8.1 Overview of Operations of Data Distribution System 10]

An overview of operations of data distribution system 10 configured as described above will be given next.

FIG. 9 is a flowchart illustrating an example of the operations of data distribution system 10 according to the present embodiment.

First, service server 400 generates the challenge content (S11). More specifically, service server 400 generates challenge content including a goal that can be determined based on a user's data, and for which an incentive is provided to the user when the user achieves the goal with which they are challenging themselves.

Next, service server 400 generates a smart contract based on the challenge content generated in step S11 (S12). More specifically, service server 400 generates the second smart contract programmed to be capable of executing the provision of an incentive to the user when the goal indicated by the challenge content generated in step S11 is achieved.

Next, service server 400 records the smart contract generated in step S12 in the distributed ledger and runs the smart contract (S13). More specifically, service server 400 generates the second transaction data including the second smart contract and transmits that data to, for example, authentication server 200a among the plurality of authentication servers 200. Upon doing so, authentication server 200a, together with the plurality of authentication servers 200b and 200c, which are different from authentication server 200a, among the plurality of authentication servers 200, executes a consensus algorithm for agreeing on the validity of the second transaction data. As a result, the second transaction data can be recorded in the distributed ledger, and the second smart contract stored in the working memory as a result of the second transaction data being recorded in the distributed ledger can be run.

Next, authentication server 200a notifies the device used by the user of the challenge content (S14). More specifically, for example, when authentication server 200a runs the second smart contract, terminal 110, which is the device used by the user, is notified of the challenge content.

Next, for example, authentication server 200a obtains the transaction data including the challenge content selected by the user (S15). More specifically, for example, authentication server 200a obtains, from terminal 110 which is the device used by the user, the third transaction data including the first challenge content selected from among the challenge content by the user to be registered.

Next, for example, authentication server 200a records the transaction data obtained in step S15 in the distributed ledger (S16). More specifically, for example, authentication server 200a, together with the plurality of authentication servers 200b and 200c, executes a consensus algorithm for agreeing on the validity of the third transaction data. Through this, for example, authentication server 200a records the third transaction data in the distributed ledger.

### [1.8.2 Overall Sequence of Data Distribution System 10]

The overall sequence of data distribution system 10 will be described next. FIG. 10 is an overall sequence chart of data distribution system 10 according to the present embodiment. Each process will be described later.

First, in step S100, consent information registration processing is performed among terminal 110, residence 100, and authentication servers 200a to 200c. A case where terminal 110 registers the consent information in the consent information registration processing will be described below. The same processing is performed when control device 101 of residence 100 registers the consent information, and thus a case where control device 101 of residence 100 registers the consent information will not be described.

Next, in step S200, challenge registration processing is performed among terminal 110, residence 100, authentication servers 200a to 200c, and service server 400. A case where terminal 110 registers a challenge in the challenge registration processing will be described below. The same processing is performed when control device 101 of residence 100 registers a challenge, and thus a case where control device 101 of residence 100 registers a challenge will not be described.

Next, in step S300, data registration processing is performed among terminal 110, residence 100, authentication servers 200a to 200c, and detection server 300. A case where the obtained user data is registered by terminal 110 in the data registration processing will be described below. The same processing is performed when residence 100 registers data of a residential device, and thus a case where residence 100 registers data of a residential device will not be described.

Next, in step S400, data reference processing is performed among terminal 110, residence 100, authentication servers 200a to 200c, detection server 300, and service server 400. The data reference processing of step S400 can be executed after the user's consent information is registered in the consent information registration processing of step S100.

Next, in step S500, support registration processing is performed among terminal 110, residence 100, terminal 120, authentication servers 200a to 200c, and detection server 300. A case where terminal 120 registers support in the support registration processing will be described below. When the support registration processing is performed, the data reference processing of step S400 may be executed after the support registration processing of step S500 is performed.

### [1.8.3 Consent Information Registration Processing]

The consent information registration processing performed among terminal 110 and authentication servers 200a to 200c will be described next.

FIG. 11 is a sequence chart illustrating the consent information registration processing among terminal 110 and authentication servers 200a to 200c according to the present embodiment. The example illustrated in FIG. 11 is a case where terminal 110 registers the consent information.

First, terminal 110 generates the consent information based on a user operation (S101). Here, an application is installed as inputter 1013 in terminal 110, and the application may generate the consent information based on the user operation. In this case, the user can cause terminal 110 to generate the consent information by selecting or deselecting items in a list of service providers to be data recipients, or in a list of data, provided by inputter 1013.

When causing terminal 110 to generate the consent information, the user may cause the consent information to be generated based on whether there is a large amount of feedback from the service provider. For example, the user may determine which data recipient to select (i.e., consent to provide data) based on the content of feedback such as the provision of virtual currency or a coupon or discount from the service provider when the data is provided to the service provider. Additionally, for example, the user may determine which data recipient to select (i.e., consent to provide data) based on the content of feedback to the user such as the value of the virtual currency or the value of the coupon or discount when the data is provided to the service provider. The feedback may be published by the service provider, or may be recorded in the blockchain of authentication servers 200.

Next, terminal 110 generates the first smart contract based on the consent information generated in step S101 (S102). Here, the first smart contract is a smart contract programmed to be capable of executing a determination as to whether the data can be provided. The first smart contract may include the consent information generated in step S101. Furthermore, the first smart contract may include a program that can execute a determination as to whether to provide feedback when the feedback is at least a certain level.

Next, terminal 110 generates transaction data that includes the generated consent information and the first smart contract (called "first transaction data" hereinafter) (S103).

Next, terminal 110 transmits the first transaction data generated in step S103 to authentication server 200a (S104). In the example illustrated in FIG. 11, terminal 110 transmits the generated first transaction data to authentication server 200a, but that data may also be transmitted to authentication servers 200b and 200c. The same is true for transmission to authentication servers 200b and 200c.

Next, authentication server 200a obtains the first transaction data from terminal 110 (S105), and then verifies the obtained first transaction data (S106).

If the verification of the first transaction data is not successful in step S106 (N in S106), authentication server 200a transmits a notification to that effect to terminal 110 (S107).

On the other hand, if the verification of the first transaction data is successful in step S106 (Y in S106), authentication server 200a forwards the first transaction data to the other authentication servers 200 (authentication servers 200b and 200c) (S108). Note that the other authentication servers 200 also verify the forwarded first transaction data.

Next, authentication server 200a, authentication server 200b, and authentication server 200c execute the consensus algorithm (S109). When authentication server 200a, authentication server 200b, and authentication server 200c verify that the first transaction data is valid transaction data (i.e., verify the validity), each generates a block including the first transaction data. Authentication servers 200a, 200b, and 200c then record the block including the first transaction data in the distributed ledger.

The first smart contract created by terminal 110 and the consent information are recorded in the distributed ledger in this manner.

By being recorded in the distributed ledger, the first smart contract becomes executable, i.e., is run (S110). Note that after being recorded in the distributed ledger, the first smart contract becomes executable by being stored in the working memory of authentication server 200a or the like.

### [1.8.4 Challenge Registration Processing]

The challenge registration processing performed among terminal 110, authentication servers 200a to 200c, and service server 400 will be described next.

FIGS. 12A and 12B are sequence charts illustrating challenge registration processing performed among terminal 110, authentication servers 200a to 200c, and service server 400 according to the present embodiment.

First, service server 400 generates the challenge content provided by the service provider (S201). More specifically, the service provider determines the challenge content related to the user's data to be obtained from the user. Then, the service provider causes service server 400 to generate the determined challenge content, i.e., challenge content including a goal that can be determined based on the user's data, and for which an incentive is provided to the user when the user achieves the goal with which they are challenging themselves.

Next, service server 400 generates the second smart contract based on the challenge content generated in step S201 (S202). In the present embodiment, the service provider determines the incentive to be provided to the user when the goal indicated by the challenge content is achieved. The service provider also determines the incentive to be provided to the supporter who registered the support information for the challenge content when the goal indicated by the challenge content is achieved. Service server 400 is caused to generate the second smart contract based on these determinations. Accordingly, the generated second smart contract is a smart contract programmed to be capable of executing the provision of an incentive to the user when the goal indicated by the challenge content is achieved. Furthermore, the generated second smart contract is programmed to be capable of executing the provision of an incentive to the supporter who registered the support information for the challenge content when the goal indicated by the challenge content is achieved.

Next, service server 400 generates the second transaction data including the second smart contract generated in step S202 (S203).

Next, service server 400 transmits the second transaction data generated in step S203 to authentication server 200c (S204). In the example illustrated in FIG. 12A, terminal 110 transmits the generated second transaction data to authentication server 200c, but that data may also be transmitted to authentication servers 200a and 200b. The same is true for transmission to authentication servers 200a and 200b.

Next, authentication server 200c obtains the second transaction data from service server 400 (S205), and then verifies the obtained second transaction data (S206).

If the verification of the second transaction data is not successful in step S206 (N in S206), authentication server 200c transmits a notification to that effect to service server 400 (S207).

On the other hand, if the verification of the second transaction data is successful in step S206 (Y in S206), authentication server 200c forwards the second transaction data to the other authentication servers 200 (authentication servers 200a and 200b) (S208). Note that the other authentication servers 200 also verify the forwarded second transaction data.

Next, authentication server 200a, authentication server 200b, and authentication server 200c execute the consensus algorithm (S209). When authentication server 200a, authentication server 200b, and authentication server 200c verify that the second transaction data is valid transaction data (i.e., verify the validity), each generates a block including the second transaction data. Authentication servers 200a, 200b, and 200c then record the block including the second transaction data in the distributed ledger.

The second smart contract created by service server 400 is recorded in the distributed ledger in this manner.

Next, by being recorded in the distributed ledger, the second smart contract becomes executable, i.e., is run (S210). Note that after being recorded in the distributed ledger, the second smart contract becomes executable by being stored in the working memory of authentication server 200a or the like.

Next, for example, authentication server 200a notifies terminal 110, which is the device used by the user, of the challenge content (S211). The notification of the challenge content may be provided to all terminals participating in the service provided by service server 400, or only to terminals that have registered consent information, e.g., terminal 110.

Next, terminal 110 obtains the challenge content for which a notification was made in step S211 (S212) and determines whether to register the challenge (S213), as illustrated in FIG. 12B. For example, terminal 110 determines to register the challenge when the first challenge content for registering a challenge is selected by the user from among the challenge content for which the notification was made in step S211.

If in step S213 the user registers a challenge (Y in S213), terminal 110 generates third transaction data including the first challenge content selected by the user for registering a challenge from among the challenge content for which the notification was made in step S211 (S214). Note that if the challenge is not registered in step S213 (N in S213), the challenge registration processing ends.

Next, terminal 110 transmits the third transaction data generated in step S214 to authentication server 200a (S215). In the example illustrated in FIG. 12B, terminal 110 transmits the generated third transaction data to authentication server 200a, but that data may also be transmitted to authentication servers 200b and 200c. The same is true for transmission to authentication servers 200b and 200c.

Next, authentication server 200a obtains the third transaction data from terminal 110 (S216), and then verifies the obtained third transaction data (S217).

If the verification of the third transaction data is not successful in step S217 (N in S217), authentication server 200a transmits a notification to that effect to terminal 110 (S218).

On the other hand, if the verification of the third transaction data is successful in step S217 (Y in S217), authentication server 200a forwards the third transaction data to the other authentication servers 200 (authentication servers 200b and 200c) (S219). Note that the other authentication servers 200 also verify the forwarded third transaction data.

Next, authentication server 200a, authentication server 200b, and authentication server 200c execute the consensus algorithm (S220). When authentication server 200a, authentication server 200b, and authentication server 200c verify that the third transaction data is valid transaction data (i.e., verify the validity), each generates a block including the third transaction data. Authentication servers 200a, 200b, and 200c then record the block including the third transaction data in the distributed ledger.

The third smart contract created by terminal 110 is recorded in the distributed ledger in this manner.

### [1.8.5 Data Registration Processing]

The data registration processing performed among terminal 110, authentication servers 200a to 200c, and detection server 300 will be described next.

FIGS. 13A and 13B are sequence charts illustrating the data registration processing performed among terminal 110, authentication servers 200a to 200c, and detection server 300 according to the present embodiment. The example in FIG. 13A illustrates a case where data obtained from terminal 110 is registered in detection server 300. The example in FIG. 13B illustrates a case where data obtained from terminal 110 is registered in detection server 300, and an incentive is provided to terminal 110 in response to the challenge being achieved.

First, terminal 110 obtains user data such as measurement data obtained from sensors included in terminal 110 (S301). When terminal 110 is, for example, a wearable device and includes a sensor, vital data such as, for example, step number data or blood pressure data obtained by the sensor is obtained as the data. As described above, the data is not limited to vital data such as step number data or blood pressure data, and may be any user data that can be utilized by a service provider.

Next, terminal 110 generates the fourth transaction data including information indicating the user's data obtained in step S301 (S302). Here, the information indicating the user's data is, for example, a hash value of the data and attribute information of the data. In this case, the fourth transaction data includes a blockchain address, the hash value, the attribute information, and a signature. In other words, when the user's data is not recorded in the distributed ledger, the fourth transaction data will not include the user's data itself, but rather only information indicating the user's data.

Next, terminal 110 transmits the data obtained in step S301 and the fourth transaction data generated in step S302 to detection server 300 (S303).

Next, detection server 300 obtains the fourth transaction data and data from terminal 110 (S304), and detection server 300 detects whether the data obtained in step S304 is incorrect data (S305).

If in step S305 the data obtained in step S304 is incorrect data (Y in S305), detection server 300 transmits a notification to that effect to terminal 110 (S306).

On the other hand, if in step S304 the data obtained in step S304 is not incorrect data (N in S305), detection server 300 detects whether the user of terminal 110 has achieved the challenge based on the data obtained in step S304 (S307). More specifically, detection server 300 detects whether the user has achieved the challenge by using the data obtained in step S304 to determine whether the user has achieved the goal with which they are challenging themselves, as indicated by the first challenge content registered by the user of terminal 110.

If in step S307 the user of terminal 110 has achieved the challenge (Y in S307), the sequence moves to step S315 (described later).

On the other hand, if in step S307 the user of terminal 110 has not achieved the challenge (N in S307), the fourth transaction data obtained in step S304 is transmitted to authentication server 200a (S308). In the example illustrated in FIG. 13A, terminal 110 transmits the fourth transaction data obtained in step S304 to authentication server 200a, but that data may also be transmitted to authentication servers 200b and 200c. The same is true for transmission to authentication servers 200b and 200c.

Next, detection server 300 records the data obtained in step S304 (S309).

Next, authentication server 200a obtains the fourth transaction data from detection server 300 (S310), and then verifies the obtained fourth transaction data (S311). Steps S309 and S310 need not be performed in this order, and the order may be changed.

If the verification of the fourth transaction data is not successful in step S311 (N in S311), authentication server 200a transmits a notification to that effect to detection server 300 (S312).

On the other hand, if the verification of the fourth transaction data is successful in step S311 (Y in S311), authentication server 200a forwards the fourth transaction data to the other authentication servers 200 (authentication servers 200b and 200c) (S313). Note that the other authentication servers 200 also verify the forwarded fourth transaction data.

Next, authentication server 200a, authentication server 200b, and authentication server 200c execute the consensus algorithm (S314). When authentication server 200a, authentication server 200b, and authentication server 200c verify that the fourth transaction data is valid transaction data (i.e., verify the validity), each generates a block including the fourth transaction data. Authentication servers 200a, 200b, and 200c then record the block including the fourth transaction data in the distributed ledger.

In this manner, the fourth transaction data including information indicating the user's data is recorded in the distributed ledger, while the user's data itself is recorded in detection server 300.

On the other hand, if in step S307 the user of terminal 110 has achieved the challenge (Y in S307), the fifth transaction data is generated based on the fourth transaction data obtained in step S304 (S315). Here, the fifth transaction data includes an indication that the challenge content has been achieved, in addition to the information indicating the user's data included in the fourth transaction data.

Next, detection server 300 transmits the fifth transaction data generated in step S315 to authentication server 200a (S316). In the example illustrated in FIG. 13B, terminal 110 transmits the fifth transaction data generated in step S315 to authentication server 200a, but that data may also be transmitted to authentication servers 200b and 200c. The same is true for transmission to authentication servers 200b and 200c.

Next, detection server 300 records the data obtained in step S304 (S317).

Next, authentication server 200a obtains the fifth transaction data from detection server 300 (S318), and then verifies the obtained fifth transaction data (S319). Steps S317 and S318 need not be performed in this order, and the order may be changed.

If the verification of the fifth transaction data is not successful in step S319 (N in S319), authentication server 200a transmits a notification to that effect to detection server 300 (S320).

On the other hand, if the verification of the fifth transaction data is successful in step S319 (Y in S319), authentication server 200a forwards the fifth transaction data to the other authentication servers 200 (authentication servers 200b and 200c) (S321). Note that the other authentication servers 200 also verify the forwarded fifth transaction data.

Next, authentication server 200a, authentication server 200b, and authentication server 200c execute the consensus algorithm (S322). When authentication server 200a, authentication server 200b, and authentication server 200c verify that the fifth transaction data is valid transaction data (i.e., verify the validity), each generates a block including the fifth transaction data. Authentication servers 200a, 200b, and 200c then record the block including the fifth transaction data in the distributed ledger.

Next, authentication server 200a, authentication server 200b, and authentication server 200c execute the second smart contract recorded in the distributed ledger (S323). As described above, it is assumed that the second smart contract is a smart contract generated based on the challenge content. By being recorded in the distributed ledger during the challenge registration processing, the second smart contract is stored in the working memory and can be executed. Through this, the second smart contract provides an incentive to terminal 110 of the user who has achieved the challenge.

Next, authentication server 200a notifies terminal 110 of the user that the incentive for achieving the challenge has been provided (S324).

In this manner, not only can the second smart contract automatically provide the user with an incentive for achieving the challenge, but authentication server 200a also automatically notifies terminal 110 of the user that the incentive has been provided. Note that if the smart contract is capable of implementing a notification function, the second smart contract may be caused to perform the challenge content notification in step S211 or the incentive notification in step S324.

### [1.8.6 Data Reference Processing]

The data reference processing performed among terminal 110, authentication servers 200a to 200c, detection server 300, and service server 400 will be described next.

FIGS. 14A and 14B are sequence charts illustrating the data reference processing performed among terminal 110, authentication servers 200a to 200c, detection server 300, and service server 400 according to the present embodiment. The examples in FIGS. 14A and 14B illustrate a case where service server 400 obtains the user's data from detection server 300.

First, service server 400 determines, for example, what kind of user data is to be obtained, and then determines to make a request to obtain the data (S401).

Next, service server 400 generates a data obtainment request indicating that a request to obtain data, and generates the sixth transaction data including the data obtainment request (S402).

Next, service server 400 transmits the sixth transaction data generated in step S402 to authentication server 200c (S403). In the example illustrated in FIG. 14A, service server 400 transmits the sixth transaction data generated in step S402 to authentication server 200c, but that data may also be transmitted to authentication servers 200a and 200b. The same is true for transmission to authentication servers 200a and 200b.

Next, authentication server 200c obtains the sixth transaction data from service server 400 (S404), and then verifies the obtained sixth transaction data (S405).

If the verification of the sixth transaction data is not successful in step S405 (N in S405), authentication server 200c transmits a notification to that effect to service server 400 (S406).

On the other hand, if the verification of the sixth transaction data is successful in step S405 (Y in S405), authentication server 200c forwards the sixth transaction data to the other authentication servers 200 (authentication servers 200a and 200b) (S407). Note that the other authentication servers 200 also verify the forwarded sixth transaction data.

Next, authentication server 200a, authentication server 200b, and authentication server 200c execute the consensus algorithm (S408). When authentication server 200a, authentication server 200b, and authentication server 200c verify that the sixth transaction data is valid transaction data (i.e., verify the validity), each generates a block including the sixth transaction data. Authentication servers 200a, 200b, and 200c then record the block including the sixth transaction data in the distributed ledger.

Next, authentication server 200a, authentication server 200b, and authentication server 200c execute the first smart contract recorded in the distributed ledger (S409). The first smart contract is a smart contract generated based on the consent information, and, by being recorded in the distributed ledger, is stored in the working memory and can be executed. The first smart contract executed by authentication servers 200 then determines whether the data requested by service server 400 can be provided, based on the consent information. The first smart contract transmits a notification of the result of the determination to detection server 300 and service server 400 (S410).

Next, detection server 300 and service server 400 receive the notification transmitted in step S410 (S411). It is assumed that the notification transmitted in step S410 indicates that the requested data can be provided to service server 400.

Next, service server 400 makes a request to detection server 300 to provide data (S412). Note that service server 400 may access detection server 300 to obtain the data provided.

Next, detection server 300 obtains the request to provide data from service server 400 (S413), confirms the notification received from authentication servers 200 in step S411, and determines whether the requested data can be provided to service server 400 (S414). Note that in step S414, if the notification received from authentication server 200 in step S411 is confirmed and it is determined that the requested data cannot be provided to service server 400 (N in S414), a notification to that effect is transmitted to service server 400 (S415).

In step S414, if the notification received from authentication server 200 in step S411 is confirmed and it is determined that the requested data can be provided to service server 400 (Y in S414), the requested data is provided to service server 400 (S416).

Next, service server 400 obtains the requested data (S417).

Upon doing so, service server 400 generates the seventh transaction data (S418). More specifically, service server 400 generates the seventh transaction data including the information pertaining to an incentive payment in response to the user's data being provided or the user's data being referenced.

Next, service server 400 transmits the seventh transaction data generated in step S418 to authentication server 200c (S419). In the example illustrated in FIG. 14B, service server 400 transmits the generated seventh transaction data to authentication server 200c, but that data may also be transmitted to authentication servers 200a and 200b. The same is true for transmission to authentication servers 200a and 200b.

Next, authentication server 200c obtains the seventh transaction data from service server 400 (S420), and then verifies the obtained seventh transaction data (S421).

If the verification of the seventh transaction data is not successful in step S421 (N in S421), authentication server 200c transmits a notification to that effect to service server 400 (S422).

On the other hand, if the verification of the seventh transaction data is successful in step S421 (Y in S421), authentication server 200c forwards the seventh transaction data to the other authentication servers 200 (authentication servers 200a and 200b) (S423). Note that the other authentication servers 200 also verify the forwarded seventh transaction data.

Next, authentication server 200a, authentication server 200b, and authentication server 200c execute the consensus algorithm (S424). When authentication server 200a, authentication server 200b, and authentication server 200c verify that the seventh transaction data is valid transaction data (i.e., verify the validity), each generates a block including the seventh transaction data. Authentication servers 200a, 200b, and 200c then record the block including the seventh transaction data in the distributed ledger.

Next, authentication server 200a, authentication server 200b, and authentication server 200c execute the third smart contract recorded in the distributed ledger (S425). The third smart contract is a smart contract generated based on providing an incentive payment or feedback in response to the user's data being provided or the user's data being referenced. By being recorded in the distributed ledger, the third smart contract is stored in the working memory and can be executed. In the present embodiment, the third smart contract can distribute or make a notification of the incentive to terminal 110 used by the user whose data has been provided or referenced.

Next, for example, authentication server 200a transmits a notification that an incentive has been provided to terminal 110 used by the user whose data has been provided or referenced through the third smart contract (S426).

Note that service server 400 may generate transaction data including information pertaining to providing feedback in step S418. In this case, the third smart contract pertaining to providing feedback is executed in step S425.

In this manner, the data reference processing is performed among terminal 110, residence 100, authentication servers 200a to 200c, detection server 300, and service server 400, and an incentive is then provided automatically.

### [1.8.7 Support Registration Processing]

The support registration processing performed among terminal 110, terminal 120, authentication servers 200a to 200c, and detection server 300 will be described next.

FIG. 15A is a sequence chart illustrating challenge registration processing performed among terminal 110, terminal 120, and authentication servers 200a to 200c according to the present embodiment. FIG. 15B is a sequence chart illustrating challenge registration processing performed among terminal 110, authentication servers 200a to 200c, and detection server 300 according to the present embodiment. FIGS. 15A and 15B illustrate terminal 120 as a device used by a supporter to register support information.

First, terminal 120 performs processing for referencing the challenge content provided by the service provider (S501). In the present embodiment, terminal 120 can obtain, from authentication server 200a, the challenge content registered by the user among the challenge content and then refer to that challenge content by transmitting a reference request for the challenge content to authentication server 200a. Authentication server 200a that has obtained the reference request for the challenge content may further transmit information on the user who registered the challenge. The information on the user may be, for example, identification information of terminal 110, or may be attribute information of the user, such as height, weight, age, gender, and the like. Authentication server 200a that has obtained the reference request for the challenge content may transmit the content and results of the challenge registration up to the point of obtaining the reference request to terminal 120, or if the user has given consent, all of the information which the user has consented to may be transmitted to terminal 120.

Next, in response to a user operation, terminal 120 determines whether to support the user in achieving the challenge based on the challenge content referred to in step S501 (S502). For example, when the user selects challenge content to support from among the registered challenge content, terminal 120 determines to support the user in achieving the challenge.

If terminal 120 determines to support the user in achieving the challenge in step S502 (Y in S502), terminal 120 generates support information that supports the user in achieving the challenge based on the challenge content referred to in step S501 (S503). In step S502, if the user is not to be supported in achieving the challenge (N in S502), the support registration processing ends.

Next, terminal 120 generates the eighth transaction data including the support information generated in step S503 (S504). The eighth transaction data includes, for example, the generated support information and the address of the second smart contract.

Next, terminal 120 transmits the eighth transaction data generated in step S504 to authentication server 200a (S505). In the example illustrated in FIG. 15A, terminal 120 transmits the generated eighth transaction data to authentication server 200a, but that data may also be transmitted to authentication servers 200b and 200c. The same is true for transmission to authentication servers 200b and 200c.

Next, authentication server 200a obtains the eighth transaction data from terminal 120 (S506), and then verifies the obtained eighth transaction data (S507).

If the verification of the eighth transaction data is not successful in step S507 (N in S507), authentication server 200a transmits a notification to that effect to terminal 120 (S508).

On the other hand, if the verification of the eighth transaction data is successful in step S507 (Y in S507), authentication server 200a forwards the eighth transaction data to the other authentication servers 200 (authentication servers 200b and 200c) (S509). Note that the other authentication servers 200 also verify the forwarded eighth transaction data.

Next, authentication server 200a, authentication server 200b, and authentication server 200c execute the consensus algorithm (S510). When authentication server 200a, authentication server 200b, and authentication server 200c verify that the eighth transaction data is valid transaction data (i.e., verify the validity), each generates a block including the eighth transaction data. Authentication servers 200a, 200b, and 200c then record the block including the eighth transaction data in the distributed ledger.

Next, authentication server 200a, authentication server 200b, and authentication server 200c execute the second smart contract recorded in the distributed ledger (S511). As described above, the second smart contract is a smart contract generated based on the challenge content, and is programmed to be capable of executing the registration of the support information for the challenge content.

Authentication server 200a notifies terminal 110 of the user of the challenge content for which the support information has been recorded by the second smart contract that the support information has been recorded (S512). Note that the notification that the support information has been recorded, i.e., a support notification, may be made by the second smart contract if the smart contract has become capable of implementing a notification function.

The subsequent steps S513 to S519 are the same as steps S301 to S307 described with reference to FIG. 13A, and steps S520 to S527 are the same as steps S315 to S322 described with reference to FIG. 13B, and will therefore not be described here.

Next, in step S528, authentication server 200a, authentication server 200b, and authentication server 200c execute the second smart contract recorded in the distributed ledger. As described above, it is assumed that the second smart contract is a smart contract generated based on the challenge content. The second smart contract is furthermore programmed to be capable of executing the provision of an incentive to the supporter who registered the support information for the challenge content when the goal indicated by the challenge content is achieved.

Accordingly, the second smart contract stored in the working memory of authentication server 200a provides incentives to terminal 110 used by the user and terminal 120 used by the supporter.

Next, for example, authentication server 200a transmits an incentive notification that an incentive has been provided to terminal 110 used by the user and terminal 120 used by the supporter through the second smart contract (S529). Note that the incentive notification may be made by the second smart contract if the smart contract has become capable of implementing a notification function.

In this manner, the second smart contract can automatically provide incentives for achieving a challenge to terminal 110 used by the user and terminal 120 used by the supporter.

### [1.9 Effects of Embodiment]

According to the present embodiment, a user's consent information or the content of challenge registration can be securely recorded in the blockchain. Additionally, according to the present embodiment, the user can have a smart contract automatically execute data registration and challenge registration, and if the user successfully achieves the challenge by having the data registered, the smart contract can immediately distribute an incentive. In addition, the user can use smart contracts to register challenge items be registered for the challenge, which not only makes it possible to prevent tampering with the distribution of incentives, but also enables the service provider to flexibly design changes to incentives using smart contracts.

As described thus far, according to the control method, data distribution system, and the like disclosed in the present embodiment, a benefit can be presented to a user while ensuring data traceability.

More specifically, a user can be notified of the content of a challenge for which the user will be provided an incentive upon achievement of the goal with which the user is challenging themselves, and the user can automatically be provided an incentive when the challenge is determined to have been achieved based on data obtained from the user. In other words, by presenting a benefit to the user, the data can continue to be obtained from the user.

Furthermore, because distributed ledgers, which are blockchain technology, are used, information about the data obtained from the user can be recorded. In other words, data traceability can be ensured.

Accordingly, a benefit can be presented to a user while ensuring data traceability.

In addition, the transaction data generated when the challenge is actually achieved based on data obtained from the user is recorded in the distributed ledger, which enables the smart contract to automatically provide an incentive to the device used by the user.

Through this, a system which can continue to obtain data from the user by presenting a benefit to the user can be executed automatically without human intervention. As a result, more user data that can be utilized can be collected, which can contribute to the realization of Society 5.0.

In addition, by recording transaction data including support information for the challenge content with which the user is challenging themselves in a distributed ledger, the smart contract can be caused to automatically register the support information for the challenge content.

This enables the user to refer to the support information for the challenge content with which the user is challenging themselves at any time, and thus the user can continue to work on the challenge content. In other words, a benefit to the user can be presented.

In this manner, a system which can continue to obtain data from the user by automatically presenting a benefit to the user without human intervention can be executed automatically without human intervention.

In addition, by recording transaction data including support information in the distributed ledger, the smart contract can be caused to automatically provide an incentive to the device, used by the supporter, that generated the transaction data. Accordingly, the supporter can be allowed to continue to support the challenge content, and a benefit to the user can therefore be presented.

In this manner, a system which can continue to obtain data from the user by automatically presenting a benefit to the user and the supporter without human intervention can be executed automatically without human intervention.

In addition, the more supporters who register support information for the challenge content with which the user is challenging themselves, the more incentives are provided to the user, and thus the user can work on the challenge content even more consistently. In other words, a greater benefit to the user can be presented.

Additionally, the distributed ledger records an indication that data has been forwarded or made available for reference, and thus the data can be utilized while ensuring data traceability. The user can therefore provide their data with peace of mind.

As the benefit to the user, challenge content that includes goals for the user to improve or maintain their health, or challenge content that includes goals for an energy-efficient and ecological user lifestyle, can be presented.

### [2 Other Variations]

Although the present disclosure has been described based on the aforementioned embodiments, the present disclosure is of course not limited to the embodiments discussed above. The present disclosure is also inclusive of the following cases.

(1) The foregoing embodiment described service server 400 as registering the challenge content by including that content in the second smart contract, and the first challenge content with which the user is challenging themselves being registered for the challenge content included in the second smart contract, but the configuration is not limited thereto. When registering the first challenge content with which the user is challenging themselves, a new smart contract in which the first challenge content is written and managed may be registered for the second smart contract. In this case, terminal 110 may generate a new smart contract and register the first challenge.
(2) The foregoing embodiment described the challenge content generated by service server 400 as being recorded in authentication server 200a, but the configuration is not limited thereto. A challenge management server which manages the support information in addition to the challenge content may be provided, and the challenge content generated by service server 400 may be recorded in the challenge management server. The challenge management server may then publish the recorded challenge content and the like to the devices used by the users, such as terminal 110. In this case too, the smart contract may be recorded in a distributed ledger of authentication server 200a and the like and run in the working memory, and the incentive may be provided automatically when the challenge is achieved.
(3) Although not specifically mentioned in the foregoing embodiment, the blockchain recorded in the distributed ledger of authentication server 200a and the like may be published to service server 400 and the devices used by the users, such as terminal 110 and the like.
(4) The foregoing embodiment described the smart contract generated by service server 400 when registering a challenge as being recorded in the distributed ledger of authentication server 200a and the like, and authentication server 200a and the like notifying the devices used by the users, such as terminal 110, of the challenge content, but the configuration is not limited thereto. Service server 400 may notify the devices used by the users of the challenge content when the challenge is registered.
(5) The foregoing embodiment described detection server 300 and authentication servers 200 as being separate devices, but the configuration is not limited thereto. Detection server 300 and authentication servers 200 may be the same device.
(6) The foregoing embodiment described service server 400 as making a request to provide data to detection server 300 in step S412 of the data reference processing illustrated in FIG. 14A, but the configuration is not limited thereto. The configuration may be such that the provision of the data requested can be obtained through the processing of the executed smart contract simply by service server 400 generating transaction data including the data obtainment request in step S402 and transmitting the data to the authentication server. In other words, steps S412 to S415 in FIG. 14A may be omitted.
(7) The foregoing embodiment described a case where data obtained from the devices used by the users, such as terminal 110, is recorded in detection server 300, but the configuration is not limited thereto. A data collection server that collects data from the devices used by the users, such as terminal 110, may be provided separately from detection server 300. In this case, the devices used by the users, such as terminal 110, may transmit the data to detection server 300, and detection server 300 may record only data verified as valid in the data collection server. The devices used by the users, such as terminal 110, may transmit the data to the data collection server, and the validity of the data recorded by the data collection server may be verified by the detection server.
(8) The foregoing embodiment described body composition monitor 105 and sphygmomanometer 106 as being connected to control device 101 as illustrated in FIG. 2, but the configuration is not limited thereto. Body composition monitor 105 and sphygmomanometer 106 may be connected to terminal 110 wirelessly, and terminal 110 may collect the measurement data. In this case, the data collected by terminal 110 may be transmitted to detection server 300.
(9) The present disclosure may also include registering virtual currency and points held by the user of terminal 110 at the time of challenge registration in the challenge content generated by service server 400, and distributing an incentive of at least the registered virtual currency and points when the challenge is achieved. The virtual currency and points held by the user of terminal 110 when the support information is registered may also be registered in the challenge content. In this case, the distribution of incentives of at least the virtual currency or points registered when registering the support information may be included when another user's challenge is achieved.
(10) The foregoing embodiment described terminal 110 as registering the challenge and terminal 120, which is different from terminal 110, as registering the support information, but the configuration is not limited thereto. Terminal 110 used by the user may register the challenge, and a supporter, who is a different user from that user, may use terminal 110 to register the support information in response to the challenge being registered.
(11) The foregoing embodiment described the challenge content of terminal 110 being published after being registered in the challenge content managed by the smart contract, but the configuration is not limited thereto. It may be made possible to select whether registered challenge content is to be published or kept private when terminal 110 registers the consent information or registers the challenge content.
(12) The foregoing embodiment described an incentive such as virtual currency or points being distributed when a challenge is achieved after the challenge is registered, but the configuration is not limited thereto.

If the user fails to achieve the goal indicated by the challenge content after the challenge is registered, the user may be required to pay virtual currency or points held by terminal 110. In this case, the virtual currency or points in terminal 110 may be sent when the challenge is registered, and paid to the blockchain address of service server 400 when the challenge is failed.

Furthermore, if the user for the challenge content being supported by terminal 120 which registered support information fails to achieve the goal indicated by the challenge content, terminal 120 that registered the support information may also be required to send virtual currency or points held by terminal 120 to service server 400.

(13) The challenge content generated by service server 400 may also include a change in the amount of virtual currency or points distributed as an incentive depending on the degree to which the goal indicated by the challenge content is achieved.

(14) Additionally, the foregoing embodiment described more incentives being provided as the number of supporters who have registered support information for the challenge content increases, but the configuration is not limited thereto. Changing the amount of virtual currency or points distributed as an incentive based on the number of pieces of support information registered for the challenge content may be included as well.

(15) In addition, the type of incentive, such as virtual currency or points, obtained when the challenge is achieved, may be different from the type of incentive, such as virtual currency or points, obtained when the challenge is achieved as a result of registering support information. Whether virtual currency or points have an expiration date or usage restrictions can be given as examples of types of incentives. For example, the virtual currency or points obtained when a challenge is achieved may be available for unlimited use, whereas the virtual currency or points obtained when a challenge is achieved as a result of registering support information may have an expiration date or be available for use only in registering a challenge.

(16) Information on the devices used by the users, such as terminal 110 that registered a challenge, may be published. The information on the device is, for example, attribute information such as the gender or age of the user using the device, the degree of achievement of the goal indicated by the challenge content when the challenge was registered in the past, or information on past data registration. In addition, all of the information on the devices used by the users may be published, or only some of the information may be published. Even when information on the devices used by users is published, it may be possible to change the information published each time a challenge is registered.

(17) The foregoing embodiment described one terminal 110 being used to register data after a challenge is registered, but the configuration is not limited thereto. If the devices used by the users are a plurality of terminals, such as a wearable device and a smartphone, the data may be registered by the plurality of terminals after the challenge is registered.

For example, service server 400 may generate challenge content that includes an indication that whether a goal is achieved can be determined by the sum of data, such as the number of steps, obtained by the plurality of terminals. In this case, the data registered first among the data registered by the plurality of terminals may be selected as the data with which the achievement of the goal is to be determined; or, the identification information of a single terminal may be specified and the data registered by that single terminal may be selected; or data may be selected at random from the data registered by the plurality of terminals and used as the data with which the achievement of the goal is to be determined.

(18) Additionally, for example, in step S214 in FIG. 12B, terminal 110 may generate the third transaction data including a contract address of the second smart contract and its own blockchain address, i.e., the blockchain address of terminal 110 that registers the challenge. Likewise, for example, in step S504 in FIG. 15A, terminal 120 may generate the eighth transaction data including a contract address of the second smart contract and its own blockchain address, i.e., the blockchain address of terminal 120 that registers the support information. Terminal 120 may further generate the eighth transaction data including the blockchain address of terminal 110 that registered the challenge content to register the support information.

(19) The present disclosure describes service server 400 as being included in data distribution system 10 and belonging to the same group in the same blockchain infrastructure, but the configuration is not limited thereto. Service server 400 may belong to a group different from the group formed by data distribution system 10. In this case, an indication that data has been forwarded or can be referred to is recorded both in the distributed ledger belonging to a first group in which the user's data for achieving the challenge is recorded, and in the distributed ledger belonging to a second group, constituted by service server 400, in which the user's data is provided. This configuration makes it possible for data belonging to different groups to be linked. Accordingly, it is possible to implement a control method and the like for a data distribution system which enables data to be utilized while ensuring traceability of data even among different groups, which makes it possible to contribute to the realization of Society 5.0.

(20) Each device in the foregoing embodiments is specifically a computer system constituted by a microprocessor, ROM, RAM, a hard disk unit, a display unit, a keyboard, a mouse, and the like. A computer program is recorded in the RAM or hard disk unit. Each device realizes the functions thereof by the microprocessor operating in accordance with the computer program. Here, the computer program is constituted by a combination of a plurality of command codes that indicate commands made to a computer to achieve a predetermined function.

(21) Some or all of the constituent elements constituting the devices in the foregoing embodiments may be implemented by a single integrated circuit through system LSI (Large-Scale Integration). "System LSI" refers to very-large-scale integration in which multiple constituent elements are integrated on a single chip, and specifically, refers to a computer system configured including a microprocessor, ROM, RAM, and the like. A computer program is recorded in the RAM. The system LSI circuit realizes the functions thereof by the microprocessor operating in accordance with the computer program.

The parts of the constituent elements constituting the foregoing devices may be implemented individually as single chips, or may be implemented with a single chip including some or all of the devices.

Although the term "system LSI" is used here, other names, such as IC, LSI, super LSI, ultra LSI, and so on may be used, depending on the level of integration. Further, the manner in which the circuit integration is achieved is not limited to LSIs, and it is also possible to use a dedicated circuit or a general purpose processor. An FPGA (Field Programmable Gate Array) capable of post-production programming or a reconfigurable processor in which the connections and settings of the circuit cells within the LSI can be reconfigured may be used as well.

Further, if other technologies that improve upon or are derived from semiconductor technology enable integration technology to replace LSI circuits, then naturally it is also possible to integrate the function blocks using that technology. Biotechnology applications are one such foreseeable example.

(22) Some or all of the constituent elements constituting the foregoing devices may be constituted by IC cards or stand-alone modules that can be removed from and mounted in the apparatus. The IC card or the module is a computer system constituted by a microprocessor, ROM, RAM, and the like. The IC card or module may include the above very-large-scale integration LSI circuit. The IC card or module realizes the functions thereof by the microprocessor operating in accordance with the computer program. The IC card or module may be tamper-resistant.

(23) The present disclosure may be realized by the methods described above. This may be a computer program that implements these methods on a computer, or a digital signal constituting the computer program.

Additionally, the present disclosure may also be computer programs or digital signals recorded in a computer-readable recording medium such as a flexible disk, a hard disk, a CD-ROM, an MO, a DVD, a DVD-ROM, a DVD-RAM, a BD (Blu-ray (registered trademark) Disc), semiconductor memory, or the like. The constituent elements may also be the digital signals recorded in such a recording medium.

Additionally, the present disclosure may be realized by transmitting the computer program or digital signal via a telecommunication line, a wireless or wired communication line, a network such as the Internet, a data broadcast, or the like.

The present disclosure may also be a computer system including a microprocessor and memory, where the memory stores the above-described computer program and the microprocessor operates in accordance with the computer program.

The present disclosure may also be implemented by another independent computer system, by recording the program or the digital signal in the recording medium and transferring the recording medium, or by transferring the program or the digital signal over the network or the like.

(24) The above-described embodiments and variations may be combined as well.

### [Industrial Applicability]

The present disclosure can be used in a data distribution method, a program, and a data distribution system capable of automatically executing a system in which data can be continuously obtained from a user without human intervention by using smart contracts to automatically execute challenge registration, support information registration, incentive distribution, and the like, for example.

### [Reference Signs List]

10 Data distribution system
100 Residence
101 Control device
102 Solar photovoltaic generation device
103 Storage battery
104 Air conditioner
105 Body composition monitor
106 Sphygmomanometer
110, 120 Terminal
200, 200a, 200b, 200c Authentication server
211 Transaction data verifier
212 Block generator
213 Synchronizer
214 Smart contract executor
215, 314, 414, 1014, 1104 Storage
216, 315, 415, 1015, 1105 Communicator
300 Detection server
311 Data manager
312 Detector
313, 413, 1012, 1101 Transaction data generator
400 Service server
411 Service manager
412 User manager
500 Communication network
1011 Controller
1013, 1102 Inputter
1103 Data obtainer

## Claims

1. A control method for a data distribution system, the data distribution system including a plurality of authentication servers, each having a distributed ledger, and a service server, the control method comprising:
generating, by the service server, challenge content in which an incentive is provided to a user when the user achieves a goal which can be determined based on data of the user and which the user is challenging;
generating, by the service server, a first smart contract programmed to be capable of executing provision of the incentive to the user when the goal indicated by the challenge content generated is achieved;
generating first transaction data including the first smart contract and transmitting the first transaction data to a first authentication server among the plurality of authentication servers, by the service server;
recording the first transaction data in the distributed ledger of the first authentication server and running the first smart contract by the first authentication server executing a consensus algorithm for agreeing on a validity of the first transaction data with a plurality of second authentication servers, among the plurality of authentication servers, that are different from the first authentication server;
notifying a device used by the user of the challenge content, by the first authentication server;
obtaining, from the device, second transaction data including first challenge content selected by the user to be registered from among the challenge content, by the first authentication server; and
recording the second transaction data in the distributed ledger by the first authentication server executing a consensus algorithm for agreeing on a validity of the second transaction data with the plurality of second authentication servers.

2. The control method according to claim 1, comprising:
obtaining, by the first authentication server, third transaction data generated when the goal indicated by the first challenge content is determined to have been achieved based on data of the user obtained by the device, the third transaction data including information on the data; and
recording the third transaction data in the distributed ledger by the first authentication server executing a consensus algorithm for agreeing on a validity of the third transaction data with the plurality of second authentication servers,
wherein when the third transaction data is recorded in the distributed ledger, the first smart contract provides an incentive to the device used by the user when the goal indicated by the first challenge content is achieved.

3. The control method according to claim 2,
wherein the first smart contract is further programmed to be capable of executing registration of support information for the challenge content,
the first authentication server obtains fourth transaction data generated by a different device from the device, the fourth transaction data including support information for the first challenge content,
the first authentication server records the fourth transaction data in the distributed ledger by executing a consensus algorithm for agreeing on a validity of the fourth transaction data with the plurality of second authentication servers, and
when the fourth transaction data is recorded in the distributed ledger, the first smart contract registers the support information for the first challenge content.

4. The control method according to claim 3,
wherein the first smart contract is further programmed to be capable of executing provision of an incentive to a supporter who has registered the support information for the first challenge content when the goal indicated by the first challenge content is achieved, and
when the third transaction data is recorded in the distributed ledger, the first smart contract provides, to the device used by the user and the different device used by the supporter, the incentive provided when the goal indicated by the first challenge content is achieved.

5. The control method according to claim 4,
wherein the first smart contract is further programmed to be capable of executing provision of more incentives as a number of supporters who have registered support information for the first challenge content increases.

6. The control method according to any one of claims 1 to 5, comprising:
obtaining fifth transaction data including a second smart contract programmed to be capable of executing a determination as to whether the data from the device can be provided based on consent information pertaining to utilization of the data, and running the second smart contract by recording the fifth transaction data in the distributed ledger, by the first authentication server;
generating sixth transaction data including a data obtainment request indicating a request to obtain the data, and transmitting the sixth transaction data to the first authentication server, by the service server; and
obtaining the sixth transaction data and recording the sixth transaction data in the distributed ledger, by the first authentication server,
wherein when the sixth transaction data is recorded in the distributed ledger, the second smart contract determines whether the data can be provided to the service server, and
when the second smart contract determines that the data can be provided to the service server, the data is provided to the service server.

7. The control method according to any one of claims 1 to 6,
wherein the challenge content includes a goal for improving or maintaining health of the user, the goal being determined based on vital data of the user.

8. The control method according to any one of claims 1 to 7,
wherein the challenge content includes a goal for the user to use a storage battery installed in a residence in which the user resides in a manner that suppresses degradation of the storage battery for a set period of time, the goal being determined based on data indicating power remaining in the storage battery.

9. The control method according to any one of claims 1 to 8,
wherein the challenge content includes a goal for the user to use only power generated by residential power generation equipment installed in a residence in which the user resides for a set period of time, the goal being determined based on data indicating an amount of power generated by the residential power generation equipment and an amount of power used by the residence.

10. A data distribution system comprising a plurality of authentication servers, each having a distributed ledger, and a service server,
wherein the service server includes a CPU and a memory, and
using the CPU and the memory, the service server:
generates challenge content in which an incentive is provided to a user when the user achieves a goal which can be determined based on data of the user and which the user is challenging;
generates a first smart contract programmed to be capable of executing provision of the incentive to the user when the goal indicated by the challenge content generated is achieved; and
generates first transaction data including the first smart contract and transmits the first transaction data to a first authentication server among the plurality of authentication servers,
wherein the first authentication server records the first transaction data in the distributed ledger and runs the first smart contract by executing a consensus algorithm for agreeing on a validity of the first transaction data with a plurality of second authentication servers, among the plurality of authentication servers, that are different from the first authentication server,
the first authentication server causes the first smart contract to notify a device used by the user of the challenge content, and
the first authentication server:
obtains, from the device, second transaction data including first challenge content selected by the user to be registered from among the challenge content; and
records the second transaction data in the distributed ledger by executing a consensus algorithm for agreeing on a validity of the second transaction data with the plurality of second authentication servers.

11. A program that causes a computer to execute a control method for a data distribution system, the data distribution system including a plurality of authentication servers, each having a distributed ledger, and a service server, the control method comprising:
generating, by the service server, challenge content in which an incentive is provided to a user when the user achieves a goal which can be determined based on data of the user and which the user is challenging;
generating, by the service server, a first smart contract programmed to be capable of executing provision of the incentive to the user when the goal indicated by the challenge content generated is achieved;
generating first transaction data including the first smart contract and transmitting the first transaction data to a first authentication server among the plurality of authentication servers, by the service server;
recording the first transaction data in the distributed ledger and running the first smart contract by the first authentication server executing a consensus algorithm for agreeing on a validity of the first transaction data with a plurality of second authentication servers, among the plurality of authentication servers, that are different from the first authentication server;
notifying a device used by the user of the challenge content, by the first authentication server;
obtaining, from the device, second transaction data including first challenge content selected by the user to be registered from among the challenge content, by the first authentication server; and
recording the second transaction data in the distributed ledger by the first authentication server executing a consensus algorithm for agreeing on a validity of the second transaction data with the plurality of second authentication servers.
